(19) Europäisches Patentamt
European Patent Office
Office européen des brevets

(11) EP 4 336 345 A1

(12) EUROPEAN PATENT APPLICATION
published in accordance with Art. 153(4) EPC

(43) Date of publication:
13.03.2024 Bulletin 2024/11

(51) International Patent Classification (IPC):
$G06F\ 7/50^{(2006.01)}$ $G06F\ 7/523^{(2006.01)}$

(21) Application number: 21951373.6

(52) Cooperative Patent Classification (CPC):
G06F 7/50; G06F 7/523

(22) Date of filing: 30.07.2021

(86) International application number:
PCT/CN2021/109751

(87) International publication number:
WO 2023/004783 (02.02.2023 Gazette 2023/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129 (CN)

(72) Inventors:
• FAN, Tuanbao
Shenzhen, Guangdong 518129 (CN)
• SHI, Xiaoshan
Shenzhen, Guangdong 518129 (CN)
• JIANG, Yuexing
Shenzhen, Guangdong 518129 (CN)
• JIANG, Mingfeng
Shenzhen, Guangdong 518129 (CN)

(74) Representative: Gill Jennings & Every LLP
The Broadgate Tower
20 Primrose Street
London EC2A 2ES (GB)

(54) ACCUMULATOR, MULTIPLIER, AND OPERATOR CIRCUIT

(57)    This application provides an accumulator, a multiplier, and an operator circuit, and relates to the field of electronic technologies, to reduce an area and power consumption of the accumulator. The accumulator includes W compressor layers, where W is an integer greater than or equal to 1. The W compressor layers include at least one first compressor layer. In an input array of each first compressor layer, a first array includes a plurality of positive-phase bits, and a second array includes a plurality of negative-phase bits. Each first compressor layer includes a first compression circuit configured to compress the first array and a second compression circuit configured to compress the second array. To be specific, bits with different phases in the input array of each first compressor layer are compressed by different compression circuits.

FIG. 7A

EP 4 336 345 A1

(Cont. next page)

FIG. 7B

**Description**

**TECHNICAL FIELD**

This application relates to the field of electronic technologies, and in particular, to an accumulator, a multiplier, and an operator circuit.

**BACKGROUND**

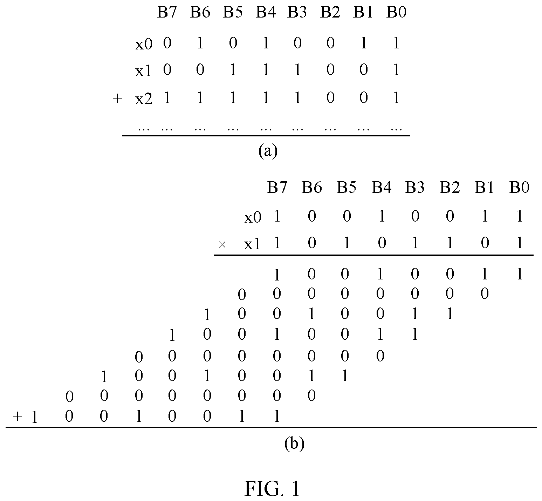

An accumulator is a computing circuit commonly used in a digital circuit design, and may be configured to implement addition (or referred to as accumulation) of a plurality of binary numbers, for example, configured to implement addition of "y=x0[7:0]+x1[7:0]+x2[7:0]+..." shown in (a) in FIG. 1. The accumulator may be further applied to a multiplier, and is configured to implement accumulation of a plurality of binary numbers in a multiplication operation, for example, configured to implement accumulation of a plurality of binary numbers in "y=x0[7:0]×x1[7:0]" shown in (b) in FIG. 1. B0 to B7 in FIG. 1 correspondingly represent different digit weights (namely, $2^0$ to $2^7$).

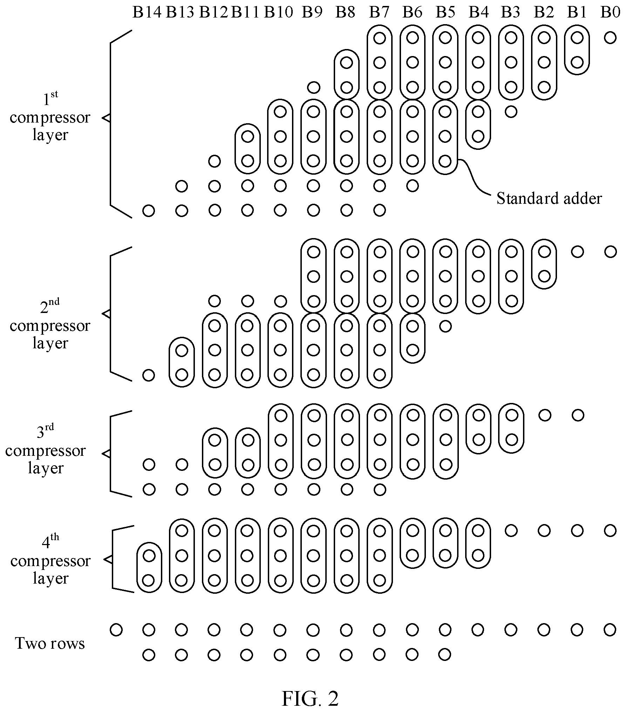

In the conventional technology, the accumulator is implemented in a Wallace tree (Wallace tree) compression manner. In addition, a plurality of standard adders (including a full adder and a half adder) separately compress a bit in each of a plurality of digit weights layer by layer, to obtain two accumulated values after multi-layer compression. Finally, the two accumulated values are added to obtain a final result. For example, as shown in FIG. 2, for accumulation computation in an 8-bit×8-bit multiplier, a plurality of to-be-accumulated binary numbers may be compressed into two rows (each row represents an accumulated value) by four compressor layers, and each compressor layer includes a plurality of standard adders. A Wallace tree is an existing method for efficient accumulation. Bits on different bits of a same layer may be compressed in parallel, and a delay of each layer is a delay of a standard full adder. Therefore, the Wallace tree has a characteristic of a fast computation speed.

However, in the accumulator implemented in the foregoing Wallace tree manner, a large quantity of standard adders (which are mainly full adders) are used. When performing multi-bit compression, the standard adder requires that both an input bit and an output bit are in a positive phase. As a result, the standard adder needs to include a functional circuit configured to perform phase unification. Consequently, the accumulator has problems such as a large area and high power consumption.

**SUMMARY**

This application provides an accumulator, a multiplier, and an operator circuit, to reduce implementation difficulty of the accumulator, so as to reduce an area and power consumption. To achieve the foregoing objective, the following technical solutions are used in this application.

According to a first aspect, an accumulator is provided, including W compressor layers, where W is an integer greater than or equal to 1. The W compressor layers are used to compress a plurality of binary numbers to obtain a plurality of accumulated values, where a sum of the plurality of accumulated values is an accumulated sum of the plurality of binary numbers. The W compressor layers include at least one first compressor layer. Each first compressor layer is used to compress an input array to obtain an output array. The input array includes a first array and a second array. The first array includes a plurality of positive-phase bits. The second array includes a plurality of negative-phase bits. The output array includes a first compressed array and a second compressed array; and Each first compressor layer includes: a first compression circuit, configured to compress the first array to obtain the first compressed array; and a second compression circuit, configured to compress the second array to obtain the second compressed array.

In the foregoing technical solution, the W compressor layers include the at least one first compressor layer. In the input array of each first compressor layer, the first array includes the plurality of positive-phase bits, and the second array includes the plurality of negative-phase bits. Therefore, the first array can be considered as a Wallace tree including the plurality of positive-phase bits. The second array may be considered as a Wallace tree including the plurality of negative-phase bits. In other words, the input array of each first compressor layer includes two Wallace trees. Phases of the bits included in the two Wallace trees are opposite. For the first array and the second array that are included in the input array of each first compressor layer, the first compression circuit is configured to compress the first array, and the second compression circuit is configured to compress the second array. In this way, bits with different phases in the input array can be compressed by different compression circuits. Therefore, there is no need to unify the bits in the input array of each first compressor layer to have a same phase. Accordingly, a functional circuit for performing phase unification processing does not need to be added, so that the accumulator is simpler than a conventional design in implementation. In addition, an area and power consumption can be reduced.

In a possible implementation of the first aspect, the first compression circuit includes one or more first compressors. Each of the one or more first compressors is used to compress three bits located in a same digit weight in the first array. The second compression circuit includes one or more second compressors. Each of the one or more second compressors is used to compress three bits located in a same digit weight in the second array. In the foregoing possible implementation, the one or more first compressors in the first compression circuit and the one or more second compressors in the second compression circuit can be configured to compress bits in corresponding bits in parallel. This improves compression efficiency of each first compressor layer.

In a possible implementation of the first aspect, each first compressor and each second compressor each are a negative-phase sum adder. The negative-phase sum adder is used to compress the three bits to obtain a carry output bit and a sum output bit. A phase of the carry output bit is the same as phases of the three bits. A phase of the sum output bit is opposite to the phases of the three bits. In the foregoing possible implementation, the negative-phase sum adder is provided. An implementation solution of the negative-phase sum adder is simple. For example, an area is small, and power consumption is low.

In a possible implementation of the first aspect, the negative-phase sum adder is used to perform the following compression: if the three bits each are 0, the carry output bit is 0, and the sum output bit is 1; if the three bits each are 1, the carry output bit is 1, and the sum output bit is 0; if one bit in the three bits is 1, and the other two bits each are 0, the carry output bit is 0, and the sum output bit is 0; or if two bits in the three bits each are 1, and the other bit is 0, the carry output bit is 1, and the sum output bit is 1. In the foregoing possible implementation, a simple and effective compression manner of the negative-phase sum adder is provided.

In a possible implementation of the first aspect, each first compressor and each second compressor each are a negative-phase carry adder. The negative-phase carry adder is used to compress the three bits to obtain a carry output bit and a sum output bit. A phase of the carry output bit is opposite to phases of the three bits. A phase of the sum output bit is the same as the phases of the three bits. In the foregoing possible implementation, the negative-phase carry adder is provided. An implementation solution of the negative-phase carry adder is simple. For example, an area is small, and power consumption is low.

In a possible implementation of the first aspect, the negative-phase carry adder is used to perform the following compression: if the three bits each are 0, the carry output bit is 1, and the sum output bit is 0; if the three bits each are 1, the carry output bit is 0, and the sum output bit is 1; if one bit in the three bits is 1, and the other two bits each are 0, the carry output bit is 1, and the sum output bit is 1; or if two bits in the three bits each are 1, and the other bit is 0, the carry output bit is 0, and the sum output bit is 0. In the foregoing possible implementation, a simple and effective compression manner of the negative-phase carry adder is provided.

In a possible implementation of the first aspect, each first compressor and each second compressor each are a double-negative-phase adder. The double-negative-phase adder is used to compress the three bits to obtain a carry output bit and a sum output bit. A phase of the carry output bit and a phase of the sum output bit are both opposite to phases of the three bits. In the foregoing possible implementation, the double-negative-phase adder is provided. An implementation solution of the double-negative-phase adder is simple. For example, an area is small, and power consumption is low.

In a possible implementation of the first aspect, the double-negative-phase adder is used to perform the following compression: if the three bits each are 0, the carry output bit is 1, and the sum output bit is 1; if the three bits each are 1, the carry output bit is 0, and the sum output bit is 0; if one bit in the three bits is 1, and the other two bits each are 0, the carry output bit is 1, and the sum output bit is 0; or if two bits in the three bits each are 1, and the other bit is 0, the carry output bit is 0, and the sum output bit is 1. In the foregoing possible implementation, a simple and effective compression manner of the double-negative-phase adder is provided.

In a possible implementation of the first aspect, the accumulator further includes a summation circuit, configured to: receive the plurality of accumulated values, and sum the plurality of accumulated values to obtain the accumulated sum.

In a possible implementation of the first aspect, the accumulator further includes one or more inverters, configured to perform negation on at least one of a sum output bit and a carry output bit that are output by one or more first compressors or second compressors in the W compressor layers, or perform negation on the three bits input to the one or more first compressors or second compressors. In the foregoing possible implementation, compression efficiency of the W compressor layers can be improved when accuracy of a compression result is ensured.

According to a second aspect, a multiplier is provided. The multiplier includes a coder and an accumulator. The accumulator is the accumulator according to any one of the first aspect or the possible implementations of the first aspect.

According to a third aspect, an operator circuit is provided. When being applied to an accumulator, the operator circuit can be used as an adder at a compressor layer of the accumulator. In addition, the adder is a negative-phase sum adder. The operator circuit includes a first transistor, a second transistor, a third transistor, a fourth transistor, a fifth transistor, a sixth transistor, a seventh transistor, an eighth transistor, a ninth transistor, a tenth transistor, an eleventh transistor, a twelfth transistor, a thirteenth transistor, a fourteenth transistor, a fifteenth transistor, a sixteenth transistor, a seventeenth transistor, an eighteenth transistor, a nineteenth transistor, a twentieth transistor, a twenty-first transistor, a twenty-second transistor, a twenty-third transistor, and a twenty-fourth transistor. The first transistor and the second transistor are coupled in parallel between a power supply end and a first node. The third transistor is coupled between the first node and a second node. The fourth transistor is coupled between the second node and a third node. The fifth transistor and the sixth transistor are coupled in parallel between the third node and a ground terminal. The seventh transistor is coupled between the power supply end and a fourth node. The eighth transistor is coupled between the second node and the fourth node. The ninth transistor is coupled between the second node and a fifth node. The tenth transistor and the eleventh transistor are coupled in series between the fourth node and a first output end. The twelfth transistor and the thirteenth transistor are coupled in series between the fifth node and the first output end. The fourteenth transistor is coupled between the fifth node and the ground terminal. The fifteenth transistor, the sixteenth transistor, and the seventeenth transistor are coupled in parallel between the power supply end and a sixth node. The eighteenth transistor is coupled between the first output end and the sixth node. The nineteenth transistor is coupled between the first output end and a seventh node. The twentieth transistor, the twenty-first transistor, and the twenty-second transistor are coupled in parallel between the seventh node and the ground terminal. Control ends of the third transistor, the fourth transistor, the eleventh transistor, the twelfth transistor, the fifteenth transistor, and the twentieth transistor are all configured to receive a first input. Control ends of the first transistor, the fifth transistor, the seventh transistor, the fourteenth transistor, the sixteenth transistor, and the twenty-first transistor are all configured to receive a second input. Control ends of the second transistor, the sixth transistor, the eighth transistor, the ninth transistor, the tenth transistor, the thirteenth transistor, the seventeenth transistor, and the twenty-second transistor are all configured to receive a third input. Control ends of the eighteenth transistor and the nineteenth transistor are both coupled to the second node. The twenty-third transistor and the twenty-fourth transistor are coupled in series between the power supply end and the ground end. A coupling point of the twenty-third transistor and the twenty-fourth transistor is a second output end. Control ends of the twenty-third transistor and the twenty-fourth transistor are both coupled to the second node. In the foregoing technical solution, the operator circuit is provided. The operator circuit has a small quantity of transistors, occupies a small area, and is easy to implement. Consequently, an accumulated area can be reduced when the operator circuit is applied to the accumulator.

In a possible implementation of the third aspect, the first transistor, the second transistor, the third transistor, the seventh transistor, the eighth transistor, the tenth transistor, the eleventh transistor, the fifteenth transistor, the sixteenth transistor, the seventeenth transistor, the eighteenth transistor, and the twenty-third transistor are PMOS transistors. The fourth transistor, the fifth transistor, the sixth transistor, the ninth transistor, the twelfth transistor, the thirteenth transistor, the fourteenth transistor, the nineteenth transistor, the twentieth transistor, the twenty-first transistor, the twenty-second transistor, and the twenty-fourth transistor are NMOS transistors. In the foregoing possible implementation, when the provided operator circuit compresses data, a toggle rate of a transistor is low. Consequently, when the operator circuit is applied to the accumulator, power consumption of the accumulator can be reduced.

According to a fourth aspect, an operator circuit is provided. When being applied to an accumulator, the operator circuit can be used as an adder at a compressor layer of the accumulator. In addition, the adder is a negative-phase carry adder. The operator circuit includes a first transistor, a second transistor, a third transistor, a fourth transistor, a fifth transistor, a sixth transistor, a seventh transistor, an eighth transistor, a ninth transistor, a tenth transistor, an eleventh transistor, a twelfth transistor, a thirteenth transistor, a fourteenth transistor, a fifteenth transistor, a sixteenth transistor, a seventeenth transistor, an eighteenth transistor, a nineteenth transistor, a twentieth transistor, a twenty-first transistor, a twenty-second transistor, a twenty-third transistor, and a twenty-fourth transistor. The first transistor and the second transistor are coupled in parallel between a power supply end and a first node. The third transistor is coupled between the first node and a first output end. The fourth transistor is coupled between the first output end and a second node. The fifth transistor and the sixth transistor are coupled in parallel between the second node and a ground terminal. The seventh transistor is coupled between the power supply end and a third node. The eighth transistor is coupled between the third node and the first output end. The ninth transistor is coupled between the first output end and a fourth node. The tenth transistor and the eleventh transistor are coupled in series between the third node and a fifth node. The twelfth transistor and the thirteenth transistor are coupled in series between the fourth node and the fifth node. The fourteenth transistor is coupled between the fourth node and the ground terminal. The fifteenth transistor, the sixteenth transistor, and the seventeenth transistor are coupled in parallel between the power supply end and a sixth node. The eighteenth transistor is coupled between the fifth node and the sixth node. The nineteenth transistor is coupled between the fifth node and a seventh node. The twentieth transistor, the twenty-first transistor, and the twenty-second transistor are coupled in parallel between the seventh node and the ground terminal. Control ends of the third transistor, the fourth transistor, the eleventh transistor, the twelfth transistor, the fifteenth transistor, and the twentieth transistor are all configured to receive a first input. Control ends of the first transistor, the fifth transistor, the seventh transistor, the fourteenth transistor, the sixteenth transistor, and the twenty-first transistor are all configured to receive a second input. Control ends of the second transistor, the sixth transistor, the eighth transistor, the ninth transistor, the tenth transistor, the thirteenth transistor, the seventeenth transistor, and the twenty-second transistor are all configured to receive a third input. Control ends of the eighteenth transistor and the nineteenth transistor are both coupled to the first output end. The twenty-third transistor and the twenty-fourth transistor are coupled in series between the power supply end and the ground end. A coupling point of the twenty-third transistor and the twenty-fourth transistor is a second output end. Control ends of the twenty-third transistor and the twenty-fourth transistor are both coupled to the fifth node. In the foregoing technical solution, the operator circuit is provided. The operator circuit has a small quantity of transistors, occupies a small area, and is easy to implement. Consequently, an accumulated area can be reduced when the operator circuit is applied to the accumulator.

In a possible implementation of the fourth aspect, the first transistor, the second transistor, the third transistor, the seventh transistor, the eighth transistor, the tenth transistor, the eleventh transistor, the fifteenth transistor, the sixteenth transistor, the seventeenth transistor, the eighteenth transistor, and the twenty-third transistor are PMOS transistors. The fourth transistor, the fifth transistor, the sixth transistor, the ninth transistor, the twelfth transistor, the thirteenth transistor, the fourteenth transistor, the nineteenth transistor, the twentieth transistor, the twenty-first transistor, the twenty-second transistor, and the twenty-fourth transistor are NMOS transistors. In the foregoing possible implementation, when the provided operator circuit compresses data, a toggle rate of a transistor is low. Consequently, when the operator circuit is applied to the accumulator, power consumption of the accumulator can be reduced.

According to a fifth aspect, a processor is provided, including an accumulator, a multiplier, or an operator circuit. The accumulator is the accumulator according to any one of the first aspect or the possible implementations of the first aspect. The multiplier is the multiplier according to the second aspect. The operator circuit is the operator circuit according to any one of the third aspect, the fourth aspect, and the possible implementations of the third aspect and the fourth aspect.

According to a sixth aspect, a chip is provided, including an accumulator, a multiplier, or an operator circuit. The accumulator is the accumulator according to any one of the first aspect or the possible implementations of the first aspect. The multiplier is the multiplier according to the second aspect. The operator circuit is the operator circuit according to any one of the third aspect, the fourth aspect, and the possible implementations of the third aspect and the fourth aspect.

It may be understood that any accumulator, processor, or chip provided above includes the accumulator or the operator circuit provided above. Therefore, for beneficial effects that can be achieved by the accumulator, the processor, or the chip, refer to the beneficial effects of the accumulator or the operator circuit provided above. Details are not described herein again.

**BRIEF DESCRIPTION OF DRAWINGS**

FIG. 1 is a schematic diagram of accumulation of a plurality of binary numbers according to an embodiment of this application;
FIG. 2 is a schematic diagram of accumulation computation in a multiplier according to an embodiment of this application;
FIG. 3 is a schematic diagram of accumulating a plurality of binary numbers by an accumulator based on a standard adder;
FIG. 4 is a schematic diagram of a structure of a communication device according to an embodiment of this application;
FIG. 5 is a schematic diagram of a structure of an accumulator according to an embodiment of this application;
FIG. 6 is a schematic diagram of a structure of a negative-phase sum adder according to an embodiment of this application;
FIG. 7A and FIG. 7B are a schematic diagram of a structure of another accumulator according to an embodiment of this application;
FIG. 8 is a schematic diagram of a structure of a negative-phase carry adder according to an embodiment of this application;
FIG. 9A and FIG. 9B are a schematic diagram of a structure of still another accumulator according to an embodiment of this application;
FIG. 10 is a schematic diagram of a structure of a double-negative-phase adder according to an embodiment of this application;
FIG. 11 is a schematic diagram of a structure of another accumulator according to an embodiment of this application;
FIG. 12 is a schematic diagram of a structure of an inverter in an accumulator according to an embodiment of this application;
FIG. 13 is a schematic diagram of a structure of an inverter in another accumulator according to an embodiment of this application;
FIG. 14 is a schematic diagram of a structure of a negative-phase sum adder according to an embodiment of this application;
FIG. 15 is a schematic diagram of a structure of a negative-phase carry adder according to an embodiment of this application;
FIG. 16 is a schematic diagram of a structure of a double-negative-phase adder according to an embodiment of this application;
FIG. 17 is a schematic diagram of a structure of a multiplier according to an embodiment of this application; and
FIG. 18 is a comparison diagram of performance of accumulation computation in a multiplier according to an embodiment of this application.

## DESCRIPTION OF EMBODIMENTS

In this application, "at least one" means one or more, and "a plurality" of means two or more. "And/or" describes an association relationship between associated objects, and indicates that three relationships may exist. For example, A and/or B may indicate the following cases: Only A exists, both A and B exist, and only B exists, where A and B may be singular or plural. "At least one of the following items (pieces)" or a similar expression thereof indicates any combination of these items, including a single item (piece) or any combination of plural items (pieces). For example, at least one of a, b, or c may indicate a, b, c, a and b, a and c, b and c, or a, b, and c, where a, b, and c may be singular or plural. In addition, in embodiments of this application, words such as "first" and "second" are for distinguishing between objects with similar names, functions, or effects. A person skilled in the art may understand that the words such as "first" and "second" do not limit a quantity and an execution sequence. The term "coupling" is for indicating an electrical connection, including a direct connection through a conductor or by using a connection end or an indirect connection by using another component. Therefore, "coupling" should be considered as an electronic communication connection in a broad sense.

Before embodiments of this application are described, a conventional technology of an accumulator implemented based on a Wallace tree in the conventional technology is first described. Currently, the accumulator implemented based on the Wallace tree usually includes a plurality of compressor layers. When the accumulator is used to accumulate a plurality of binary numbers, each bit in an input array and an output array of each compressor layer needs to be in a positive phase. In addition, a plurality of positive-phase bits at a same compressor layer are separately compressed in parallel by a plurality of standard adders. After every three bits are compressed by one standard adder, a positive-phase carry output bit and a positive-phase sum output bit are output.

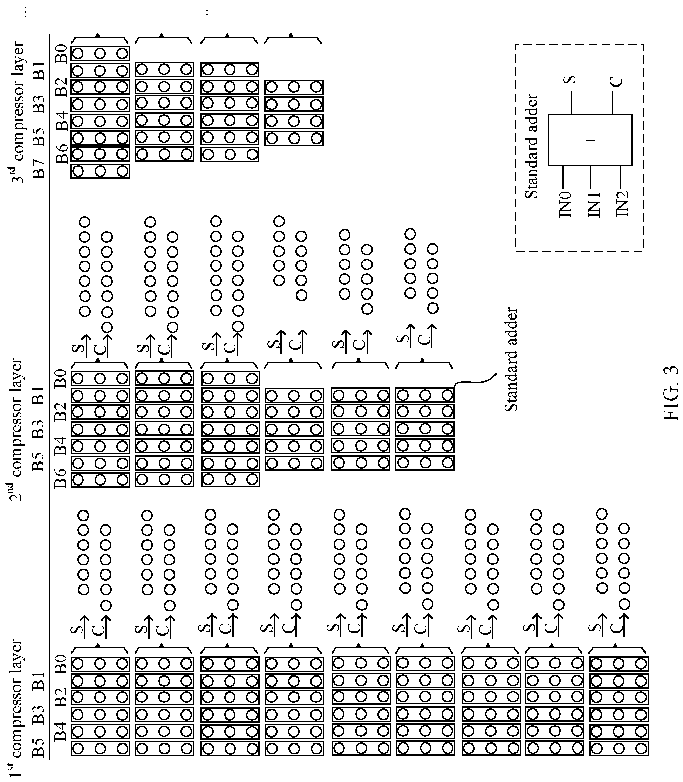

For example, as shown in FIG. 3, when the accumulator is used to perform accumulation computation on 27 6-bit (bit) binary numbers, the accumulator may include a plurality of compressor layers. Each standard adder at each of the plurality of compressor layers is used to compress three positive-phase bits (represented as IN0, IN1, and IN2 in FIG. 3). An output positive-phase carry output bit is represented as C, and an output sum output bit is represented as S. FIG. 3 shows only a 1st compressor layer to a 3rd compressor layer in the plurality of compressor layers. B0 to B5 correspondingly represent different digit weights (namely, $2°$ to $2^5$). The digit weights may also be referred to as weights. The digit weights are for bits in different places in binary, and are similar to a ones place, a tens place, a hundreds place, and the like in decimal.

A large quantity of standard adders are used in the accumulator. When performing multi-bit compression, the standard adder requires that both an input bit and an output bit are in a positive phase. As a result, the standard adder needs to include a functional circuit configured to perform phase unification. Currently, more metal-oxide-semiconductor (metal-oxide-semiconductor, MOS) transistors are usually used, to unify phases of bits. As a result, the standard adder has problems of a large quantity of MOS transistors and a large quantity of times of toggling of the MOS transistors during average unit bit computation. The standard adders in the accumulator are basically standard total adders. The standard total adder is used as an example. Each standard total adder includes a maximum of 28 MOS transistors, and occupies an area of 0.2736 um$^2$ in a 7 nm process. As a result, an area of the accumulator is large. In addition, a large quantity of MOS transistors in the standard total adder results in a large quantity of times of toggling of the MOS transistor during average unit bit computation. Consequently, power consumption of the accumulator is high. As a result, currently the accumulator implemented based on the Wallace tree has problems of a large area and high power consumption. In view of this, embodiments of this application provide an accumulator, to separately compress bits with different phases in a same compressor layer, so as to reduce power consumption and an area of the accumulator. The accumulator may be used in a communication device. For specific descriptions of the communication device and the accumulator, refer to the following.

In an accumulation computation process provided in embodiments of this application, a phase of a bit (which may also be referred to as a signal corresponding to the bit) has two phase states: a positive phase and a negative phase. The two phase states are relative. For example, if a positive phase of a bit is G, a negative phase of the bit is /G. To be specific, a negative-phase signal is a logical negation of a positive-phase signal.

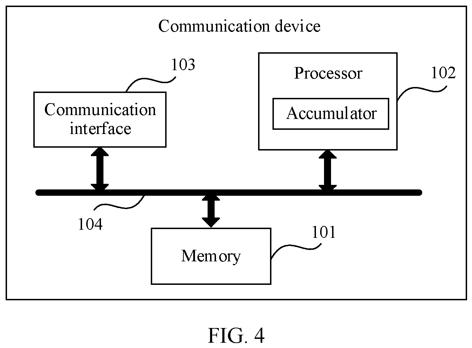

FIG. 4 is a schematic diagram of a structure of a communication device according to an embodiment of this application. The communication device may be a terminal, a server, or the like, or may be a chip, a chipset, a circuit board, a module, or the like built in a terminal or a server. Refer to FIG. 3. The communication device may include a memory 101, a processor 102, a communication interface 103, and a bus 104. The memory 101, the processor 102, and the communication interface 103 are connected to each other through the bus 104. The memory 101 may be configured to store data, a software program, and a module, and mainly includes a program storage area and a data storage area. The program storage area may store an operating system, an application program required for at least one function, and the like. The data storage area may store data created during use of the device, and the like. The processor 102 is configured to control and manage an action of the communication device, for example, perform various functions of the device and process the data by running or executing the software program and/or the module stored in the memory 101 and invoking the data stored in the memory 101. The communication interface 103 is configured to support the communication device in performing communication.

The processor 102 includes but is not limited to a central processing unit (central processing unit, CPU), a network processing unit (network processing unit, NPU), a graphics processing unit (graphics processing unit, GPU), a digital signal processor (digital signal processor, DSP), and a general-purpose processor. In this embodiment of this application, the processor 102 includes one or more accumulators, or includes one or more multipliers. For example, the processor 102 includes a multiplier array. The multiplier is a component that implements a multiplication operation in the processor 102.

The bus 104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 4, but this does not mean that there is only one bus or only one type of bus.

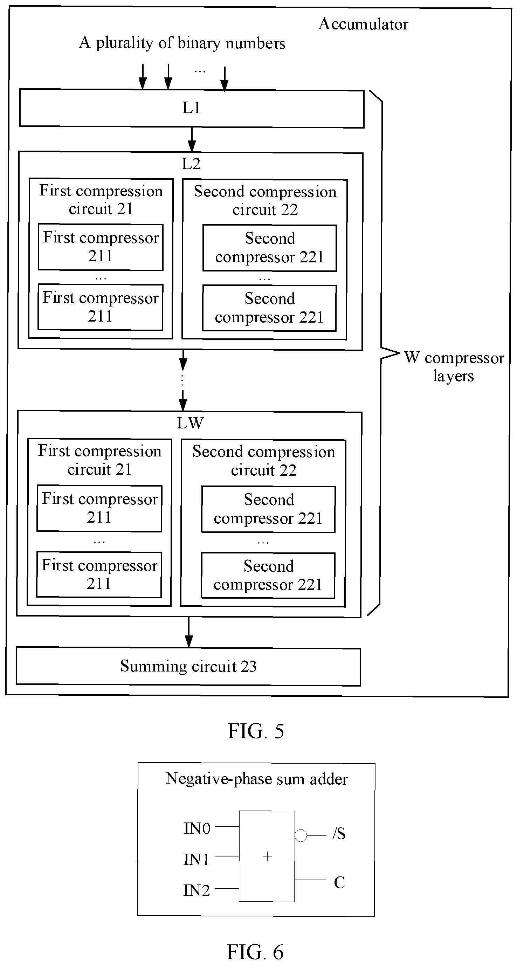

To further describe the technical solutions, FIG. 5 is a schematic diagram of a structure of an accumulator according to an embodiment of this application. The accumulator may be configured to accumulate a plurality of binary numbers. Refer to FIG. 5. The accumulator includes W compressor layers, configured to compress the plurality of binary numbers to obtain a plurality of accumulated values. A sum of the plurality of accumulated values is an accumulated sum of the plurality of binary numbers, and W is an integer greater than or equal to 1.

After the W compressor layers compress the plurality of binary numbers, a plurality of rows (each row includes one or more bits) may be obtained. Each row represents one accumulated value, that is, the plurality of rows represent the plurality of accumulated values. The plurality of accumulated values may be two accumulated values or more than two accumulated values. This is not specifically limited in embodiments of this application.

In addition, the W compressor layers may include one or more compressor layers. For example, W may be equal to 1, 4, 6, or the like. A specific value may be set, based on experience or an actual requirement, by a person skilled in the art. This is not specifically limited in embodiments of this application. In FIG. 5, an example in which the W compressor layers include a plurality of compressor layers, and the plurality of compressor layers are respectively represented as L1 to LW is used for description.

In the solutions of this application, the W compressor layers include at least one first compressor layer. Each of the at least one first compressor layer is used to compress an input array to obtain an output array. The input array includes a first array and a second array. The first array includes a plurality of positive-phase bits. The second array includes a plurality of negative-phase bits. The output array includes a first compressed array and a second compressed array. Each first compressor layer includes: a first compression circuit 21, configured to compress the first array in the input array of the first compressor layer to obtain the first compressed array; and a second compression circuit 22, configured to compress the second array in the input array of the first compressor layer to obtain the second compressed array.

Each of the W compressor layers has an input array and an output array. An input array of a $1^{st}$ compressor layer (namely, L1) of the W compressor layers may be a matrix obtained by sequentially arranging the plurality of binary numbers in descending order of digit weights. An input matrix of each compressor layer in a $2^{nd}$ to a $W^{th}$ compressor layers (namely, L2 to LW) in the W compressor layers may be an output matrix of a previous compressor layer of the compressor layer or a matrix obtained after other deformation or preprocessing is performed on the output matrix. To be specific, an input matrix of an $i^{th}$ compressor layer is an output matrix of an $(i-1)^{th}$ compressor layer or a matrix obtained after other deformation or preprocessing is performed on the output matrix. Values of i are 2 to W in sequence.

In addition, the at least one first compressor layer may include one or more first compressor layers. A quantity of the one or more first compressor layers may be represented as N, where N is a positive integer and is less than or equal to W. When N is less than W, the at least one first compressor layer may be any one or more of the W compressor layers. In FIG. 5, an example in which the at least one first compressor layer includes (W-1) first compressor layers, and the (W-1) first compressor layers are the $2^{nd}$ to the W* compressor layers (namely, L2 to LW) in the W compressor layers is used for description. It should be noted that, when N is less than W, another compressor layer other than the at least one first compressor layer in the W compressor layers may be implemented by using the conventional technology. This is not specifically limited in embodiments of this application.

In this embodiment of this application, in the input array of each first compressor layer, the first array includes the plurality of positive-phase bits, and the second array includes the plurality of negative-phase bits. Therefore, the first array can be considered as a Wallace tree including the plurality of positive-phase bits. The second array may be considered as a Wallace tree including the plurality of negative-phase bits. In other words, the input array of each first compressor layer includes two Wallace trees. Phases of the bits included in the two Wallace trees are opposite. For the first array and the second array that are included in the input array of each first compressor layer, the first compression circuit 21 is configured to compress the first array, and the second compression circuit 22 is configured to compress the second array. In this way, bits with different phases in the input array can be compressed by different compression circuits. Therefore, there is no need to unify the bits in the input array of each first compressor layer to have a same phase. Accordingly, the accumulator is simpler than a conventional design in implementation. In addition, an area and power consumption can be reduced.

Further, each of the W compressor layers may include one or more compressors. Each compressor may be configured to compress three bits in a same digit weight in an input array of the compressor layer. For the first compression circuit 21 in each first compressor layer, the first compression circuit 21 may include one or more first compressors 211. Each of the one or more first compressors 211 is configured to compress three bits located in a same digit weight in the first array. For the second compression circuit 22 in each first compressor layer, the second compression circuit 22 may include one or more second compressors 221. Each of the one or more second compressors 221 is configured to compress three bits located in a same digit weight in the second array.

The first compressor 211 and the second compressor 221 each may be any one of the following three adders. The three adders include a negative-phase sum adder, a negative-phase carry adder, and a double-negative-phase adder. The following separately describes the three adders.

Case 1: The negative-phase sum adder is used to compress the three bits to obtain a sum output bit and a carry output bit. A phase of the sum output bit is opposite to phases of the three bits. A phase of the carry output bit is the same as the phases of the three bits.

For example, as shown in FIG. 6, it is assumed that the three bits input into the negative-phase sum adder are respectively IN0, IN1, and IN2. After compressing the three bits IN0, IN1, and IN2, the negative-phase sum adder outputs a carry bit C and a sum bit /S. A phase of C is the same as phases of IN0, IN1, and IN2. A phase of /S is opposite to the phases of IN0, IN1, and IN2. In an example, the negative-phase sum adder may satisfy logical functions shown in the following formulas (1-1) and (1-2). Herein, NOT indicates a negation operation, XOR indicates an XOR operation, AND indicates an AND operation, and OR indicates an OR operation.

$$/S = NOT(IN0 \ XOR \ IN1 \ XOR \ IN2) \hspace{2cm} (1\text{-}1)$$

$$C = (IN0 \ AND \ IN1) \ OR \ (IN1 \ AND \ IN2) \ OR \ (IN0 \ AND \ IN2) \hspace{1cm} (1\text{-}2)$$

When the three bits are different values (for example, 0 or 1), the negative-phase sum adder is used to perform the following compression: if the three bits each are 0, the carry output bit is 0, and the sum output bit is 1; if the three bits each are 1, the carry output bit is 1, and the sum output bit is 0; if one bit in the three bits is 1, and the other two bits each are 0, the carry output bit is 0, and the sum output bit is 0; or if two bits in the three bits each are 1, and the other bit is 0, the carry output bit is 1, and the sum output bit is 1. In other words, the negative-phase sum adder may perform compression based on a logic table shown in Table 1.

**Table 1**

| IN0 | IN1 | IN2 | C | /S |
|-----|-----|-----|---|----|
| 0 | 0 | 0 | 0 | 1 |
| 0 | 0 | 1 | 0 | 0 |
| 0 | 1 | 0 | 0 | 0 |
| 1 | 0 | 0 | 0 | 0 |
| 1 | 1 | 0 | 1 | 1 |
| 1 | 0 | 1 | 1 | 1 |
| 1 | 1 | 0 | 1 | 1 |
| 1 | 1 | 1 | 1 | 0 |

When the first compressor 211 is the negative-phase sum adder, the first compressor 211 is configured to compress positive-phase three bits to obtain a positive-phase carry output bit and a negative-phase sum output bit. When the second compressor 221 is the negative-phase sum adder, the second compressor 221 is configured to compress negative-phase three bits to obtain a negative-phase carry output bit and a positive-phase sum output bit.

In a possible embodiment, it is assumed that each of the W compressor layers includes a plurality of negative-phase sum adders, the input array of the 1st compressor layer (namely, L1) includes only a plurality of positive-phase bits, and the input arrays of the 2nd to the W* compressors (namely, L2 to LW) each include a plurality of positive-phase bits (namely, the first array) and a plurality of negative-phase bits (namely, the second array). The foregoing descriptions may also be understood as follows: The 1st compressor layer (namely, L1) includes only one first compression circuit 21, and the first compression circuit 21 includes a plurality of first compressors 211. Each of the 2nd to the Wth compressor layers (namely, L2 to LW) includes one first compression circuit 21 and one second compression circuit 22, the first compression circuit 21 includes a plurality of first compressors 211, and the second compression circuit 22 includes a plurality of second compressors 221.

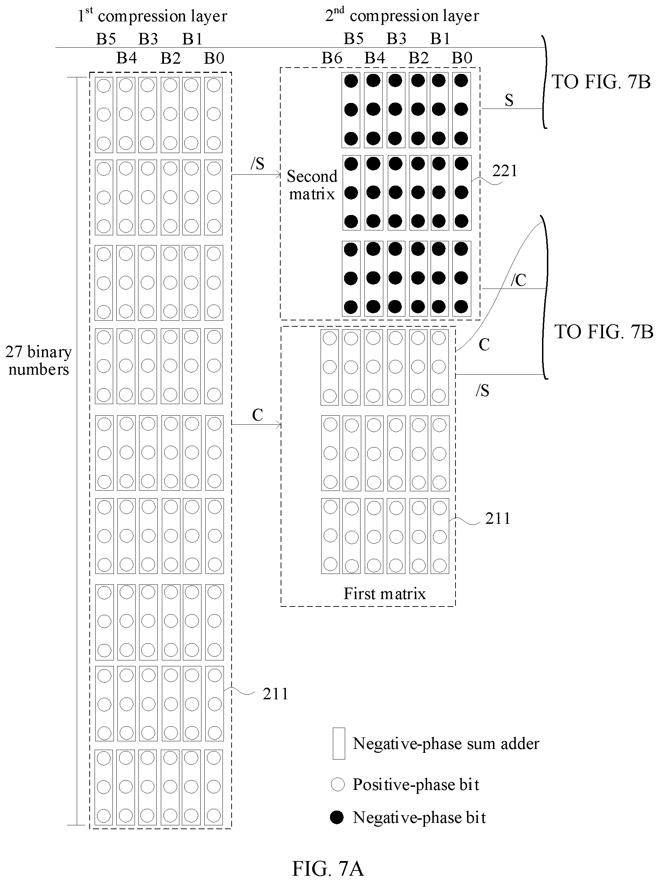

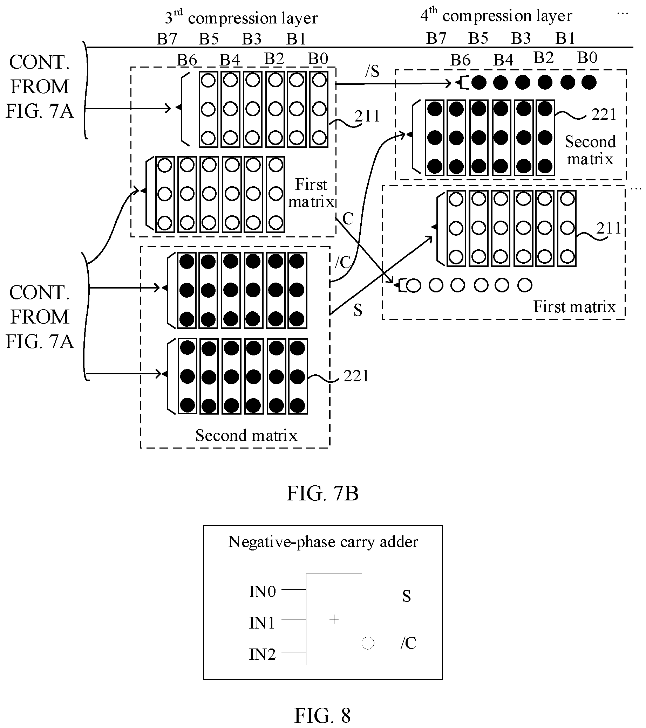

For example, as shown in FIG. 7A and FIG. 7B, when the accumulator is used to perform accumulation computation on 27 6-bit binary numbers, the 1st compressor layer (namely, L1) includes 54 first compressors 211. Each first compressor 211 is configured to compress three positive-phase bits in a same digit weight bit to output a positive-phase carry output bit C and a negative-phase sum output bit /S. The input matrix of the 2nd compressor layer (namely, L2) includes output bits output by the 54 first compressors 211. In the input matrix, the first matrix includes positive-phase carry output bits C output by the 54 first compressors 211, and the second matrix includes negative-phase sum output bits /S output by the 54 first compressors 211.

In the 2nd compressor layer (namely, L2), the first compression circuit 21 includes 18 first compressors 211, and the second compression circuit 22 includes 18 second compressors 221. Each of the 18 first compressors 211 is configured to compress three positive-phase bits in a same digit weight in the first matrix to output a positive-phase carry output bit C and a negative-phase sum output bit /S. Each of the 18 second compressors 221 is configured to compress three negative-phase bits in a same digit weight in the second matrix to output a negative-phase carry output bit /C and a positive-phase sum output bit S. An input matrix of a 3rd compressor layer (namely, L3) includes output bits output by the 18 first compressors 211 and the 18 second compressors 221. In the input matrix, a first matrix includes positive-phase carry output bits C output by the 18 first compressors 211 and positive-phase sum output bits S output by the 18 second compressors 221, and a second matrix includes negative-phase sum output bits /S output by the 18 first compressors 211 and negative-phase carry output bits /C output by the 18 second compressors 221.

In the 3rd compressor layer (namely, L3), a first compression circuit 21 includes 12 first compressors 211, and a second compression circuit 22 includes 12 second compressors 221. Each of the 12 first compressors 211 is configured to compress three positive-phase bits in a same digit weight in a first matrix to output a positive-phase carry output bit C and a negative-phase sum output bit /S. Each of the 12 second compressors 221 is configured to compress three negative-phase bits in a same digit weight in a second matrix to output a negative-phase carry output bit /C and a positive-phase sum output bit S. An input matrix of a 4th compressor layer (namely, L4) includes output bits output by the 12 first compressors 211 and the 12 second compressors 221. In the input matrix, a first matrix includes positive-phase carry output bits C output by the 12 first compressors 211 and positive-phase sum output bits S output by the 12 second compressors 221, and a second matrix includes negative-phase sum output bits /S output by the 12 first compressors 211 and negative-phase carry output bits /C output by the 12 second compressors 221.

In the 4th compressor layer (namely, L4), a first compression circuit 21 includes 6 first compressors 211, and a second compression circuit 22 includes 6 second compressors 221. Each of the 6 first compressors 211 is configured to compress three positive-phase bits in a same digit weight in a first matrix to output a positive-phase carry output bit C and a negative-phase sum output bit /S. Each of the 6 second compressors 221 is configured to compress three negative-phase bits in a same digit weight in a second matrix to output a negative-phase carry output bit /C and a positive-phase sum output bit S. An output matrix of the 4th compressor layer (namely, L4) includes positive-phase carry output bits C and negative-phase sum output bits /S that are output by the six first compressors 211, negative-phase carry output bits /C and positive-phase sum output bits S that are output by the six second compressors 221, an uncompressed positive-phase bit in the first array, and an uncompressed negative-phase bit in the second array.

It should be noted that FIG. 7A and FIG. 7B show only the 1st to the 4th compressor layers (namely, L1 to L4) in the accumulator. A compression manner of another compressor layer after the 4th compressor layer may be similar to that of the 2nd to the 4th compressor layers, or bits with different phases in the output matrix of the 4th compressor layer are converted into bits with a same phase through a negation operation, and then, are compressed in an existing compression manner. Details are not described herein in this embodiment of this application.

Case 2: The negative-phase carry adder is used to compress the three bits to obtain a sum output bit and a carry output bit. A phase of the sum output bit is the same as phases of the three bits. A phase of the carry output bit is opposite to the phases of the three bits.

For example, as shown in FIG. 8, it is assumed that the three bits input into the negative-phase carry adder are respectively IN0, IN1, and IN2. After compressing the three bits IN0, IN1, and IN2, the negative-phase carry adder outputs a carry bit /C and a sum bit S. A phase of /C is opposite to phases of IN0, IN1, and IN2. A phase of S is the same as the phases of IN0, IN1, and IN2. In an example, the negative-phase carry adder may satisfy logical functions shown in the following formulas (2-1) and (2-2). Herein, NOT indicates a negation operation, XOR indicates an XOR operation, AND indicates an AND operation, and OR indicates an OR operation.

$$S = IN0 \text{ XOR } IN1 \text{ XOR } IN2 \qquad (2\text{-}1)$$

$$/C = NOT((IN0 \text{ AND } IN1) \text{ OR } (IN1 \text{ AND } IN2) \text{ OR } (IN0 \text{ AND } IN2)) \qquad (2\text{-}2)$$

When the three bits are different values (for example, 0 or 1), the negative-phase carry adder is used to perform the following compression: if the three bits each are 0, the carry output bit is 1, and the sum output bit is 0; if the three bits each are 1, the carry output bit is 0, and the sum output bit is 1; if one bit in the three bits is 1, and the other two bits each are 0, the carry output bit is 1, and the sum output bit is 1; or if two bits in the three bits each are 1, and the other bit is 0, the carry output bit is 0, and the sum output bit is 0. In other words, the negative-phase carry adder may perform compression based on a logic table shown in Table 2.

**Table 2**

| IN0 | IN1 | IN2 | /C | S |
|-----|-----|-----|-----|-----|
| 0 | 0 | 0 | 1 | 0 |
| 0 | 0 | 1 | 1 | 1 |
| 0 | 1 | 0 | 1 | 1 |
| 1 | 0 | 0 | 1 | 1 |
| 1 | 1 | 0 | 0 | 0 |
| 1 | 0 | 1 | 0 | 0 |
| 1 | 1 | 0 | 0 | 0 |
| 1 | 1 | 1 | 0 | 1 |

When the first compressor 211 is the negative-phase carry adder, the first compressor 211 is configured to compress positive-phase three bits to obtain a negative-phase carry output bit and a positive-phase sum output bit. When the second compressor 221 is the negative-phase carry adder, the second compressor 221 is configured to compress negative-phase three bits to obtain a positive-phase carry output bit and a negative-phase sum output bit.

In a possible embodiment, it is assumed that each of the W compressor layers includes a plurality of negative-phase carry adders, the input array of the 1st compressor layer (namely, L1) includes only a plurality of positive-phase bits, and the input arrays of the 2nd to the W* compressors (namely, L2 to LW) each include a plurality of positive-phase bits (namely, the first array) and a plurality of negative-phase bits (namely, the second array). The foregoing descriptions may be understood as follows: The 1st compressor layer (namely, L1) includes only one first compression circuit 21, and the first compression circuit 21 includes a plurality of first compressors 211. Each of the 2nd to the Wth compressor layers (namely, L2 to LW) includes one first compression circuit 21 and one second compression circuit 22, the first compression circuit 21 includes a plurality of first compressors 211, and the second compression circuit 22 includes a plurality of second compressors 221.

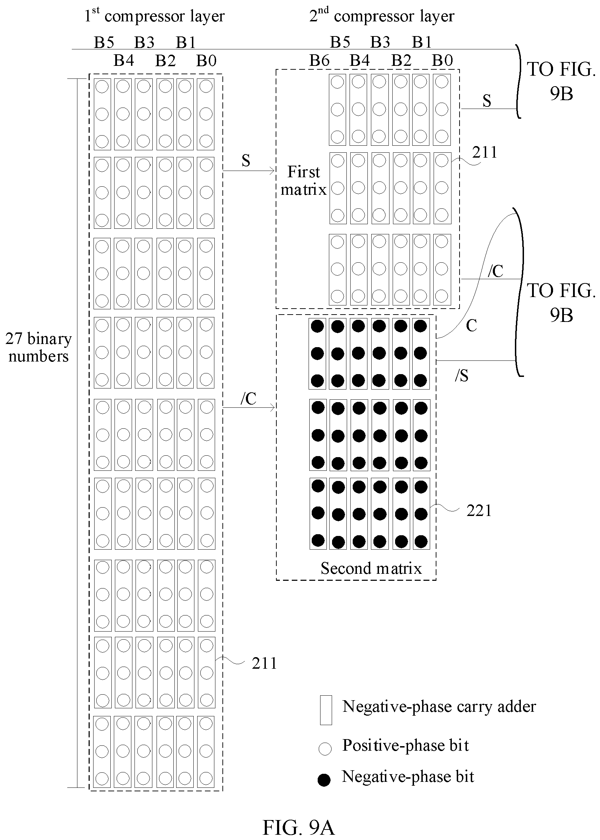

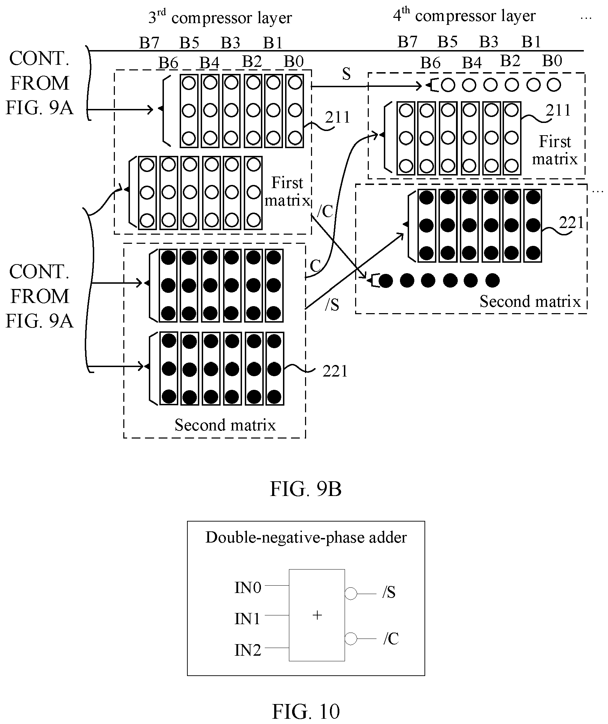

For example, as shown in FIG. 9A and FIG. 9B, when the accumulator is used to perform accumulation computation on 27 6-bit binary numbers, the 1st compressor layer (namely, L1) includes 54 first compressors 211. Each first compressor 211 is configured to compress three positive-phase bits in a same digit weight bit to output a negative-phase carry output bit /C and a positive-phase sum output bit S. The input matrix of the 2nd compressor layer (namely, L2) includes output bits output by the 54 first compressors 211. In the input matrix, the first matrix includes negative-phase carry output bits /C output by the 54 first compressors 211, and the second matrix includes positive-phase sum output bits S output by the 54 first compressors 211.

In the 2nd compressor layer (namely, L2), the first compression circuit 21 includes 18 first compressors 211, and the second compression circuit 22 includes 18 second compressors 221. Each of the 18 first compressors 211 is configured to compress three positive-phase bits in a same digit weight in a first matrix to output a negative-phase carry output bit /C and a positive-phase sum output bit S. Each of the 18 second compressors 221 is configured to compress three negative-phase bits in a same digit weight in a second matrix to output a positive-phase carry output bit C and a negative-phase sum output bit /S. An input matrix of a 3rd compressor layer (namely, L3) includes output bits output by the 18 first compressors 211 and the 18 second compressors 221. In the input matrix, a first matrix includes positive-phase sum output bits S output by the 18 first compressors 211 and positive-phase carry output bits C output by the 18 second compressors 221, and a second matrix includes negative-phase carry output bits /C output by the 18 first compressors 211 and negative-phase sum output bits /S output by the 18 second compressors 221.

In the 3<sup>rd</sup> compressor layer (namely, L3), a first compression circuit 21 includes 12 first compressors 211, and a second compression circuit 22 includes 12 second compressors 221. Each of the 12 first compressors 211 is configured to compress three positive-phase bits in a same digit weight in a first matrix to output a negative-phase carry output bit /C and a positive-phase sum output bit S. Each of the 12 second compressors 221 is configured to compress three negative-phase bits in a same digit weight in a second matrix to output a positive-phase carry output bit C and a negative-phase sum output bit /S. An input matrix of a 4<sup>th</sup> compressor layer (namely, L4) includes output bits output by the 12 first compressors 211 and the 12 second compressors 221. In the input matrix, a first matrix includes positive-phase sum output bits S output by the 12 first compressors 211 and positive-phase carry output bits S output by the 12 second compressors 221, and a second matrix includes negative-phase carry output bits /C output by the 12 first compressors 211 and negative-phase sum output bits /S output by the 12 second compressors 221.

In the 4<sup>th</sup> compressor layer (namely, L4), a first compression circuit 21 includes 6 first compressors 211, and a second compression circuit 22 includes 6 second compressors 221. Each of the 6 first compressors 211 is configured to compress three positive-phase bits in a same digit weight in a first matrix to output a negative-phase carry output bit /C and a positive-phase sum output bit S. Each of the 6 second compressors 221 is configured to compress three negative-phase bits in a same digit weight in a second matrix to output a positive-phase carry output bit C and a negative-phase sum output bit /S. An output matrix of the 4<sup>th</sup> compressor layer (namely, L4) includes negative-phase carry output bits /C and positive-phase sum output bits S that are output by the six first compressors 211, negative-phase sum output bits /S and positive-phase carry output bits C that are output by the six second compressors 221, an uncompressed positive-phase bit in the first array, and an uncompressed negative-phase bit in the second array.

It should be noted that FIG. 9A and FIG. 9B show only the 1<sup>st</sup> to the 4<sup>th</sup> compressor layers (namely, L1 to L4) in the accumulator. A compression manner of another compressor layer after the 4<sup>th</sup> compressor layer may be similar to that of the 2<sup>nd</sup> to the 4<sup>th</sup> compressor layers, or bits with different phases in the output matrix of the 4<sup>th</sup> compressor layer are converted into bits with a same phase through a negation operation, and then, are compressed in an existing compression manner. Details are not described herein in this embodiment of this application.

In addition, in both the examples in Case 1 and Case 2, an example in which the input matrix of the 1<sup>st</sup> compressor layer (namely, L1) includes only the plurality of positive-phase bits is used for description. This does not constitute a limitation on embodiments of this application. In an actual application, the input matrix of the first compressor layer (namely, L1) may also include only a plurality of negative-phase bits, or include both a positive-phase bit and a negative-phase bit.

Case 3: The double-negative-phase adder is used to compress the three bits to obtain a sum output bit and a carry output bit. Both a phase of the sum output bit and a phase of the carry output bit are opposite to phases of the three bits.

For example, as shown in FIG. 10, it is assumed that the three bits input into the double-negative-phase adder are respectively IN0, IN1, and IN2. After compressing the three bits IN0, IN1, and IN2, the double-negative-phase adder outputs a carry bit /C and a sum bit /S. Both a phase of /C and a phase of /S are opposite to phases of IN0, IN1, and IN2. In an example, the double-negative-phase adder may satisfy logical functions shown in the following formulas (3-1) and (3-2). Herein, NOT indicates a negation operation, XOR indicates an XOR operation, AND indicates an AND operation, and OR indicates an OR operation.

$$S = NOT(IN0 \ XOR \ IN1 \ XOR \ IN2) \tag{3-1}$$

$$/C = NOT((IN0 \ AND \ IN1) \ OR \ (IN1 \ AND \ IN2) \ OR \ (IN0 \ AND \ IN2)) \tag{3-2}$$

When the three bits are different values (for example, 0 or 1), the double-negative-phase adder is used to perform the following compression: if the three bits each are 0, the carry output bit is 1, and the sum output bit is 1; if the three bits each are 1, the carry output bit is 0, and the sum output bit is 0; if one bit in the three bits is 1, and the other two bits each are 0, the carry output bit is 1, and the sum output bit is 0; or if two bits in the three bits each are 1, and the other bit is 0, the carry output bit is 0, and the sum output bit is 1. In other words, the double-negative-phase adder may perform compression based on a logic table shown in Table 3.

**Table 3**

| IN0 | IN1 | IN2 | /C | S |
|-----|-----|-----|----|----|
| 0 | 0 | 0 | 1 | 1 |
| 1 | 1 | 1 | 0 | 0 |
| 0 | 0 | 1 | 1 | 0 |
| 0 | 1 | 0 | 1 | 0 |
| 1 | 0 | 0 | 1 | 0 |
| 1 | 1 | 0 | 0 | 1 |
| 1 | 0 | 1 | 0 | 1 |
| 1 | 1 | 0 | 0 | 1 |

When the first compressor 211 is the double-negative-phase adder, the first compressor 211 is configured to compress positive-phase three bits to obtain a negative-phase carry output bit and a negative-phase sum output bit. When the second compressor 221 is the double-negative-phase adder, the second compressor 221 is configured to compress negative-phase three bits to obtain a positive-phase carry output bit and a positive-phase sum output bit.

In a possible embodiment, it is assumed that each of the W compressor layers includes a plurality of double-negative-phase adders, and input arrays of the 1st to the Wth compressors (namely, L1 to LW) each include one first array and one second array. The foregoing descriptions may be understood as follows: Each of the 1st to the Wth compressor layers (namely, L 1 to LW) includes one first compression circuit 21 and one second compression circuit 22, the first compression circuit 21 includes a plurality of first compressors 211, and the second compression circuit 22 includes a plurality of second compressors 221.

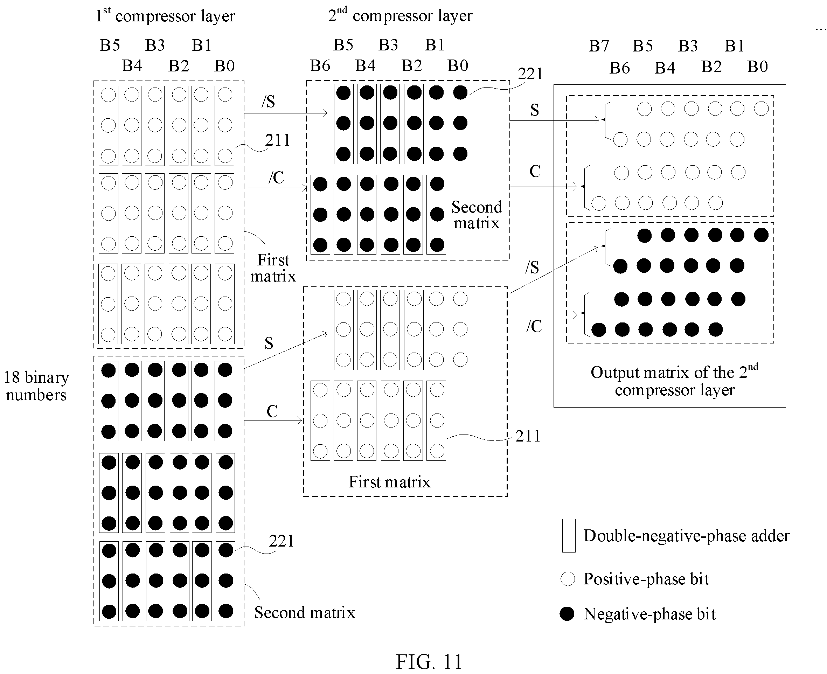

For example, as shown in FIG. 11, when the accumulator is used to perform accumulation computation on 18 6-bit binary numbers, if first nine binary numbers in the 18 binary numbers are positive-phase bits (namely, a first matrix), and last nine binary numbers are negative-phase bits (namely, a second matrix), in the 1st compressor layer (namely, L1), the first compression circuit 21 includes 18 first compressors 211, and the second compression circuit 22 includes 18 second compressors 221. Each of the 18 first compressors 211 is configured to compress three positive-phase bits in a same digit weight in a first matrix to output a negative-phase carry output bit /C and a negative-phase sum output bit /S. Each of the 18 second compressors 221 is configured to compress three negative-phase bits in a same digit weight in a second matrix to output a positive-phase carry output bit C and a positive-phase sum output bit S. In the input matrix of the 2nd compressor layer (namely, L2), a first matrix includes positive-phase carry output bits C and positive-phase sum output bits S that are output by the 18 second compressors 221, and a second matrix includes negative-phase carry output bits /C and negative-phase sum output bits /S that are output by the 18 first compressors 211.

In the 2nd compressor layer (namely, L2), a first compression circuit 21 includes 12 first compressors 211, and a second compression circuit 22 includes 12 second compressors 221. Each of the 12 first compressors 211 is configured to compress three positive-phase bits in a same digit weight in a first matrix to output a negative-phase carry output bit /C and a negative-phase sum output bit /S. Each of the 12 second compressors 221 is configured to compress three negative-phase bits in a same digit weight in a second matrix to output a positive-phase carry output bit C and a positive-phase sum output bit S. An output matrix of the 2nd compressor layer (namely, L2) includes negative-phase sum output bits /S and negative-phase carry output bits /C that are output by the 12 first compressors 211, and positive-phase sum output bits S and positive-phase carry output bits C that are output by the 12 second compressors 221.

It should be noted that FIG. 11 shows only the 1st and the 2nd compressor layers (namely, L1 and L2) in the accumulator. A compression manner of another compressor layer after the 2nd compressor layer may be similar to that of the 1st and the 2nd compressor layers, or bits with different phases in the output matrix of the 2nd compressor layer are converted into bits with a same phase through a negation operation, and then, are compressed in an existing compression manner. Details are not described herein in this embodiment of this application.

Optionally, when the at least one first compressor layer of the W compressor layers includes a plurality of first compressor layers, compression manners of first compressor layers at different layers in the plurality of first compressor layers may be the same or different. For example, the plurality of first compressor layers include at least two first compressor layers, and each first compressor and each second compressor in the at least two first compressor layers each may be one of the foregoing three adders. Alternatively, in the at least two first compressor layers, each first compressor and each second compressor in a part of the first compressor layers each are one of the foregoing three adders, and each first compressor and each second compressor in the other part of the first compressor layers each are one or two of the other two of the foregoing three adders.

Further, the accumulator may further include a summation circuit 23, configured to: receive the plurality of accumulated values, and sum the plurality of accumulated values to obtain the accumulated sum. Specifically, after the W compressor layers compress the plurality of binary numbers to obtain the plurality of accumulated values, the $W^{th}$ compressor layer (namely, LW) in the W compressor layers may send the plurality of accumulated values to the summation circuit 23. When receiving the plurality of accumulated values, the summation circuit 23 may sum the plurality of accumulated values to obtain the accumulated sum of the plurality of binary numbers. Optionally, the plurality of accumulated values are two accumulated values. In this case, the summation circuit 23 is an adder. The adder sums the two accumulated values to obtain the accumulated sum of the plurality of binary numbers.

Further, the accumulator may further include one or more inverters, configured to perform negation on at least one of a sum output bit and a carry output bit that are output by one or more first compressors or second compressors in the W compressor layers, or perform negation on the three bits input to the one or more first compressors or second compressors. In a possible embodiment, the one or more inverters are configured to perform negation on the at least one of the sum output bit and the carry output bit that are output by the one or more first compressors or second compressors in the W compressor layers.

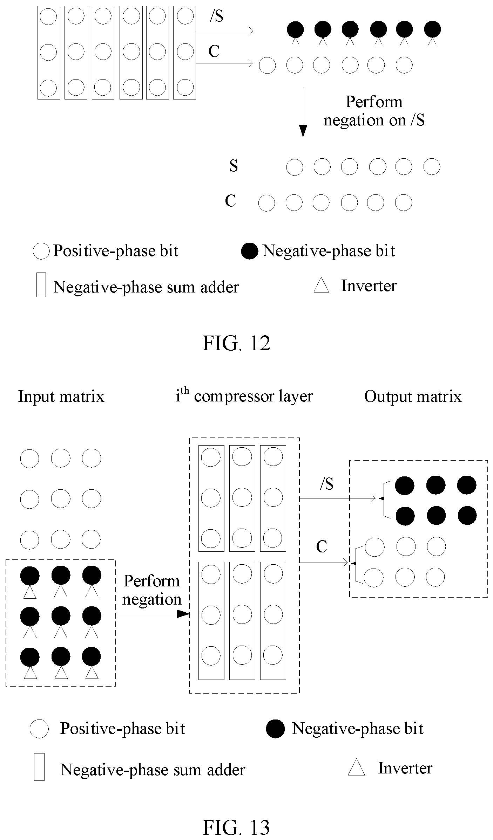

For example, as shown in FIG. 12, the $i^{th}$ compressor layer (that is, $1 \leq i \leq W$) in the W compressor layers is used as an example. It is assumed that the input matrix of the $i^{th}$ compressor layer includes positive-phase bits in three rows and six columns, the $i^{th}$ compressor layer includes six first compressors, and the six first compressors each are a negative-phase sum adder. The six first compressors are configured to compress the input matrix to output two rows. In the two rows, a first row includes six negative-phase sum output bits /S, and a second row includes six positive-phase carry output bits C. In this case, the one or more inverters may include six inverters. The six inverters may be configured to perform negation on the six negative-phase sum output bits /S in the first row to obtain six positive-phase sum output bits S. After negation, the two rows output by the $i^{th}$ compressor layer are converted into two positive-phase rows.

In another possible embodiment, the one or more inverters are configured to perform negation on the three bits input into one or more first compressors or second compressors in the W compressor layers. For example, as shown in FIG. 13, the $i^{th}$ compressor layer (that is, $1 \leq i \leq W$) in the W compressor layers is used as an example. It is assumed that the input matrix of the $i^{th}$ compressor layer includes positive-phase bits in six rows and three columns, where a first row to a third row are positive-phase bits, and a fourth row to a sixth row are negative-phase bits; the $i^{th}$ compressor layer includes six first compressors, and the six first compressors each are a negative-phase sum adder. In this case, the one or more inverters may include nine inverters. The nine inverters may be configured to separately perform negation on nine negative-phase bits in a fourth row to a sixth row to obtain nine positive-phase bits (that is, convert the bits in the fourth row to the sixth row into the positive-phase bits). To be specific, the nine inverters may be configured to perform negation on three bits input into the first compressor in a second row. After negation, six first compressors in the $1^{st}$ compressor layer may be separately configured to compress three positive-phase bits in a same data to output four rows. The four rows include negative-phase sum output bits /S in two rows and positive-phase carry output bits C in two rows.

It should be noted that the input matrix and the included first compressors of the $i^{th}$ compressor layer shown in FIG. 12 and FIG. 13 are merely examples, and do not constitute a limitation on this embodiment of this application. In this embodiment of this application, the one or more inverters perform negation on at least one of the sum output bit and the carry output bit that are output by the one or more first compressors or second compressors, or perform negation on the three bits input into the one or more first compressors or second compressors. This can improve compression efficiency of the W compressor layers when accuracy of a compression result ensured, thereby improving computation efficiency of the accumulator.

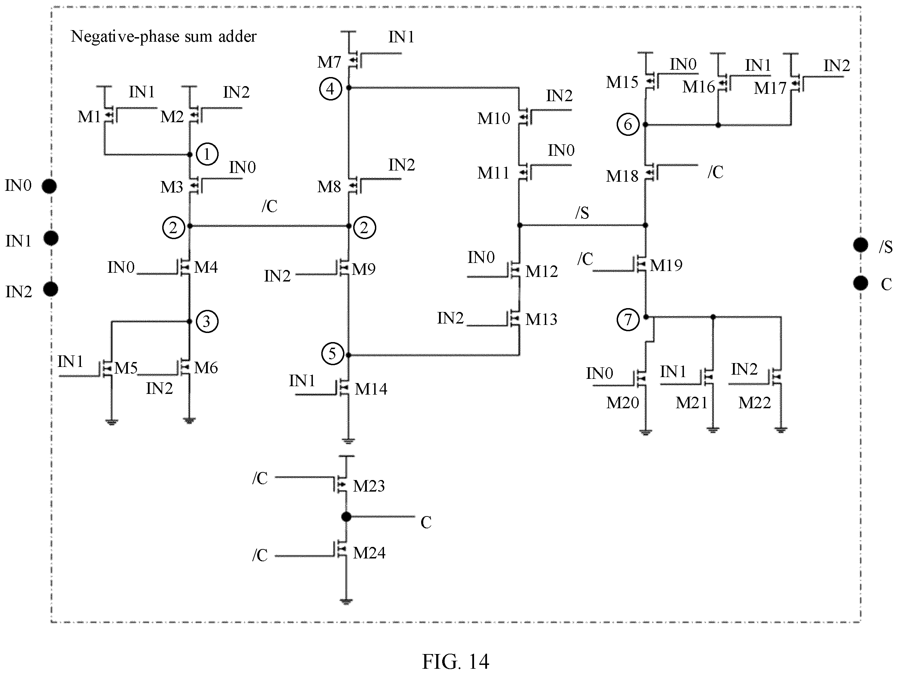

FIG. 14 is a schematic diagram of a structure of a negative-phase sum compression operator circuit according to an embodiment of this application. The negative-phase sum operator circuit may also be referred to as a negative-phase sum adder. The negative-phase sum adder includes a first transistor M1, a second transistor M2, a third transistor M3, a fourth transistor M4, a fifth transistor M5, a sixth transistor M6, a seventh transistor M7, an eighth transistor M8, a ninth transistor M9, a tenth transistor M10, an eleventh transistor M11, a twelfth transistor M12, a thirteenth transistor M13, a fourteenth transistor M14, a fifteenth transistor M15, a sixteenth transistor M16, a seventeenth transistor M17, an eighteenth transistor M18, a nineteenth transistor M19, a twentieth transistor M20, a twenty-first transistor M21, a twenty-second transistor M22, a twenty-third transistor M23, and a twenty-fourth transistor M24.

The first transistor M1 and the second transistor M2 are coupled in parallel between a power supply end and a first node ①. The third transistor M3 is coupled between the first node ① and a second node ②. The fourth transistor M4 is coupled between the second node ② and a third node ③. The fifth transistor M5 and the sixth transistor M6 are coupled in parallel between the third node ③ and a ground terminal. The seventh transistor M7 is coupled between the power supply end and a fourth node ④. The eighth transistor M8 is coupled between the second node ② and the fourth node ④. The ninth transistor M9 is coupled between the second node ② and a fifth node ⑤. The tenth transistor M10 and the eleventh transistor M11 are coupled in series between the fourth node ④ and a first output end /C. The twelfth transistor M12 and the thirteenth transistor M13 are coupled in series between the fifth node ⑤ and the first output end /C. The fourteenth transistor M14 is coupled between the fifth node ⑤ and the ground terminal. The fifteenth transistor M15, the sixteenth transistor M16, and the seventeenth transistor M17 are coupled in parallel between the power supply end and a sixth node ⑥. The eighteenth transistor M18 is coupled between the first output end /C and the sixth node ⑥ The nineteenth transistor M19 is coupled between the first output /C end and a seventh node ⑦. The twentieth transistor M20, the twenty-first transistor M21, and the twenty-second transistor M22 are coupled in parallel between the seventh node ⑦ and the ground terminal.

Control ends of the third transistor M3, the fourth transistor M4, the eleventh transistor M11, the twelfth transistor M12, the fifteenth transistor M15, and the twentieth transistor M20 are configured to receive a first input IN0 Control ends of the first transistor M1, the fifth transistor M5, the seventh transistor M7, the fourteenth transistor M14, the sixteenth transistor M16, and the twenty-first transistor M21 are configured to receive a second input IN2. Control ends of the second transistor M2, the sixth transistor M6, the eighth transistor M8, the ninth transistor M9, the tenth transistor M10, the thirteenth transistor M13, the seventeenth transistor M17, and the twenty-second transistor M22 are configured to receive a third input IN3.

Control ends of the eighteenth transistor M18 and the nineteenth transistor M19 are both coupled to the second node ②. The twenty-third transistor M23 and the twenty-fourth transistor M24 are coupled in series between the power supply end and the ground end. A coupling point of the twenty-third transistor M23 and the twenty-fourth transistor M24 is a second output end S. Control ends of the twenty-third transistor M23 and the twenty-fourth transistor M24 are both coupled to the second node ②.

In this embodiment of this application, the first input IN0, the second input IN2, and the third input IN3 may be the three bits in the related descriptions of the negative-phase sum adder in the foregoing accumulator embodiment. The first output end /S may be configured to output a sum output bit of the negative-phase sum adder. The second output end C may be configured to output a carry output bit of the negative-phase sum adder.

Optionally, the first transistor M1, the second transistor M2, the third transistor M3, the seventh transistor M7, the eighth transistor M8, the tenth transistor M10, the eleventh transistor M11, the fifteenth transistor M15, the sixteenth transistor M16, the seventeenth transistor M17, the eighteenth transistor M18, and the twenty-third transistor M23 are PMOS transistors. The fourth transistor M4, the fifth transistor M5, the sixth transistor M6, the ninth transistor M9, the twelfth transistor M12, the thirteenth transistor M13, the fourteenth transistor M14, the nineteenth transistor M19, the twentieth transistor M20, the twenty-first transistor M21, the twenty-second transistor M22, and the twenty-fourth transistor M24 are NMOS transistors. Correspondingly, the control end may be specifically a gate of a corresponding PMOS transistor or NMOS transistor.

It should be noted that the first transistor M1 to the twenty-fourth transistor M24 in the foregoing example may be MOS transistors, or may be replaced with bipolar transistors. Types of the transistors shown in FIG. 14 are merely examples, and do not constitute a limitation on this embodiment of this application. In addition, FIG. 14 is merely instance of the circuit. Any circuit in which a transistor is added based on the circuit, so that functions of a plurality of transistors are equivalent to a function of one or more transistors in FIG. 14 is also considered as a same circuit.

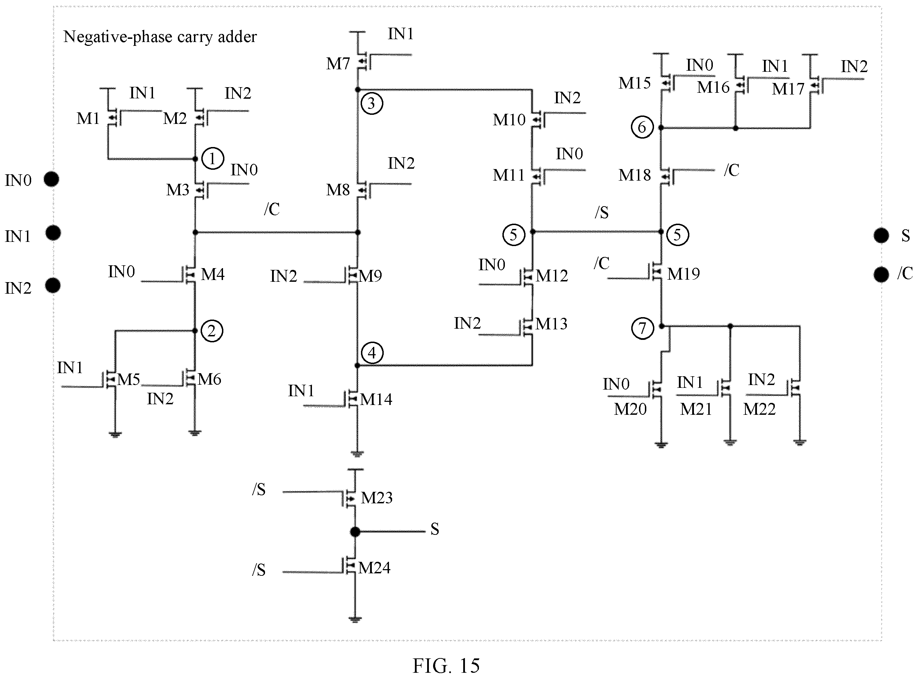

FIG. 15 is a schematic diagram of a structure of a negative-phase carry compression operator circuit according to an embodiment of this application. The negative-phase carry operator circuit may also be referred to as a negative-phase carry adder. The negative-phase carry adder includes a first transistor M1, a second transistor M2, a third transistor M3, a fourth transistor M4, a fifth transistor M5, a sixth transistor M6, a seventh transistor M7, an eighth transistor M8, a ninth transistor M9, a tenth transistor M10, an eleventh transistor M11, a twelfth transistor M12, a thirteenth transistor M13, a fourteenth transistor M14, a fifteenth transistor M15, a sixteenth transistor M16, a seventeenth transistor M17, an eighteenth transistor M18, a nineteenth transistor M19, a twentieth transistor M20, a twenty-first transistor M21, a twenty-second transistor M22, a twenty-third transistor M23, and a twenty-fourth transistor M24.

The first transistor M1 and the second transistor M2 are coupled in parallel between a power supply end and a first node ①. The third transistor M3 is coupled between the first node ① and a first output end /C. The fourth transistor M4 is coupled between the first output end /C and a second node ②. The fifth transistor M5 and the sixth transistor M6 are coupled in parallel between the second node ② and a ground terminal. The seventh transistor M7 is coupled between the power supply end and a third node ③. The eighth transistor M8 is coupled between the third node ③ and the first output end /C. The ninth transistor M9 is coupled between the first output end /C and a fourth node ④. The tenth transistor M10 and the eleventh transistor M11 are coupled in series between the third node ③ and a fifth node ⑤. The twelfth transistor M12 and the thirteenth transistor M13 are coupled in series between the fourth node ④ and the fifth node ⑤. The fourteenth transistor M14 is coupled between the fourth node ④ and the ground terminal. The fifteenth transistor M15, the sixteenth transistor M16, and the seventeenth transistor M17 are coupled in parallel between the power supply end and a sixth node ⑥. The eighteenth transistor M18 is coupled between the fifth node ⑤ and the sixth node ⑥. The nineteenth transistor M19 is coupled between the fifth node ⑤ and a seventh node ⑦. The twentieth transistor M20, the twenty-first transistor M21, and the twenty-second transistor M22 are coupled in parallel between the seventh node ⑦ and the ground terminal.

Control ends of the third transistor M3, the fourth transistor M4, the eleventh transistor M11, the twelfth transistor M12, the fifteenth transistor M15, and the twentieth transistor M20 are configured to receive a first input IN0 Control ends of the first transistor M1, the fifth transistor M5, the seventh transistor M7, the fourteenth transistor M14, the sixteenth transistor M16, and the twenty-first transistor M21 are configured to receive a second input IN2. Control ends of the second transistor M2, the sixth transistor M6, the eighth transistor M8, the ninth transistor M9, the tenth transistor M10, the thirteenth transistor M13, the seventeenth transistor M17, and the twenty-second transistor M22 are configured to receive a third input IN3.

Control ends of the eighteenth transistor M18 and the nineteenth transistor M19 are both coupled to the first output end /C. The twenty-third transistor M23 and the twenty-fourth transistor M24 are coupled in series between the power supply end and the ground end. A coupling point of the twenty-third transistor M23 and the twenty-fourth transistor M24 is a second output end S. Control ends of the twenty-third transistor M23 and the twenty-fourth transistor M24 are both coupled to the fifth node ⑤.

In this embodiment of this application, the first input IN0, the second input IN2, and the third input IN3 may be the three bits in the related descriptions of the negative-phase carry sum adder in the foregoing accumulator embodiment. The first output end /C may be configured to output a sum output bit of the negative-phase carry adder. The second output end S may be configured to output a carry output bit of the negative-phase carry adder.

Optionally, the first transistor M1, the second transistor M2, the third transistor M3, the seventh transistor M7, the eighth transistor M8, the tenth transistor M10, the eleventh transistor M11, the fifteenth transistor M15, the sixteenth transistor M16, the seventeenth transistor M17, the eighteenth transistor M18, and the twenty-third transistor M23 are PMOS transistors. The fourth transistor M4, the fifth transistor M5, the sixth transistor M6, the ninth transistor M9, the twelfth transistor M12, the thirteenth transistor M13, the fourteenth transistor M14, the nineteenth transistor M19, the twentieth transistor M20, the twenty-first transistor M21, the twenty-second transistor M22, and the twenty-fourth transistor M24 are NMOS transistors. Correspondingly, the control end may be specifically a gate of a corresponding PMOS transistor or NMOS transistor.

It should be noted that the first transistor M1 to the twenty-fourth transistor M24 in the foregoing example may be MOS transistors, or may be replaced with bipolar transistors. Types of the transistors shown in FIG. 15 are merely examples, and do not constitute a limitation on this embodiment of this application. In addition, FIG. 15 is merely instance of the circuit. Any circuit in which a transistor is added based on the circuit, so that functions of a plurality of transistors are equivalent to a function of one or more transistors in FIG. 15 is also considered as a same circuit.

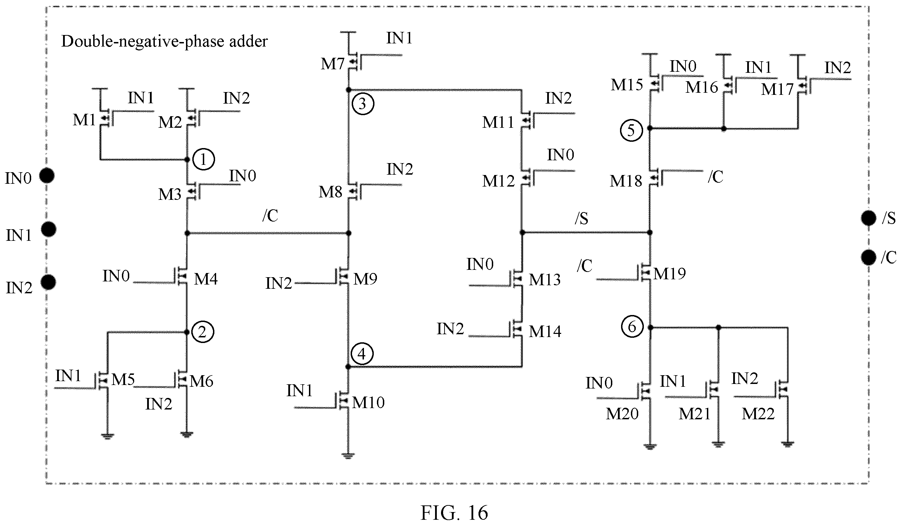

FIG. 16 is a schematic diagram of a structure of a double-negative-phase compression operator circuit according to an embodiment of this application. The double-negative-phase operator circuit may also be referred to as a double-negative-phase adder. The double-negative-phase adder includes a first transistor M1, a second transistor M2, a third transistor M3, a fourth transistor M4, a fifth transistor M5, a sixth transistor M6, a seventh transistor M7, an eighth transistor M8, a ninth transistor M9, a tenth transistor M10, an eleventh transistor M11, a twelfth transistor M12, a thirteenth transistor M13, a fourteenth transistor M14, a fifteenth transistor M15, a sixteenth transistor M16, a seventeenth transistor M17, an eighteenth transistor M18, a nineteenth transistor M19, a twentieth transistor M20, a twenty-first transistor M21, and a twenty-second transistor M22.

The first transistor M1 and the second transistor M2 are coupled in parallel between a power supply end and a first node ①. The third transistor M3 is coupled between the first node ① and a first output end /C. The fourth transistor M4 is coupled between the first output end /C and a second node ②. The fifth transistor M5 and the sixth transistor M6 are coupled in parallel between the second node ② and a ground terminal. The seventh transistor M7 is coupled between the power supply end and a third node ③. The eighth transistor M8 is coupled between the third node ③ and the first output end /C. The ninth transistor M9 is coupled between the first output end /C and a fourth node ④. The tenth transistor M10 is coupled between the fourth node ④ and the ground terminal. The eleventh transistor M11 and the twelfth transistor M12 are coupled in series between the third node ③ and a second output end /S. The thirteenth transistor M13 and the fourteenth transistor M14 are coupled in series between the second output end /S and the fourth node ④. The fifteenth transistor M15, the sixteenth transistor M16, and the seventeenth transistor M17 are coupled in parallel between the power supply end and a fifth node ⑤. The eighteenth transistor M18 is coupled between the fifth node ⑤ and the second output end /S. The nineteenth transistor M19 is coupled between the second output terminal /S and a sixth node ⑥. The twentieth transistor M20, the twenty-first transistor M21, and the twenty-second transistor M22 are coupled in parallel between the sixth node ⑥ and the ground terminal.

Control ends of the third transistor M3, the fourth transistor M4, the twelfth transistor M12, the thirteenth transistor M13, the fifteenth transistor M15, and the twentieth transistor M20 are configured to receive a first input IN0. Control ends of the first transistor M1, the fifth transistor M5, the seventh transistor M7, the tenth transistor M10, the sixteenth transistor M16, and the twenty-first transistor M21 are configured to receive a second input IN2. Control ends of the second transistor M2, the sixth transistor M6, the eighth transistor M8, the ninth transistor M9, the eleventh transistor M11, the fourteenth transistor M14, the seventeenth transistor M17, and the twenty-second transistor M22 are configured to receive a third input IN3. Control ends of the eighteenth transistor M18 and the nineteenth transistor M19 are both coupled to the first output end /C.

In this embodiment of this application, the first input IN0, the second input IN2, and the third input IN3 may be the three bits in the related descriptions of the double-negative-phase adder in the foregoing accumulator embodiment. The first output end /C may be configured to output a sum output bit of the double-negative-phase adder. The second output end S may be configured to output a carry output bit of the double-negative-phase adder.

Optionally, the first transistor M1, the second transistor M2, the third transistor M3, the seventh transistor M7, the eighth transistor M8, the eleventh transistor M11, the twelfth transistor M12, the fifteenth transistor M15, the sixteenth transistor M16, the seventeenth transistor M17, and the eighteenth transistor M18 are PMOS transistors. The fourth transistor M4, the fifth transistor M5, the sixth transistor M6, the ninth transistor M9, the tenth transistor M10, the thirteenth transistor M13, the fourteenth transistor M14, the nineteenth transistor M19, the twentieth transistor M20, the twenty-first transistor M21, and the twenty-second transistor M22 are NMOS transistors. Correspondingly, the control end may be specifically a gate of a corresponding PMOS transistor or NMOS transistor.

It should be noted that the first transistor M1 to the twenty-second transistor M22 in the foregoing example may be MOS transistors, or may be replaced with bipolar transistors. Types of the transistors shown in FIG. 16 are merely examples, and do not constitute a limitation on this embodiment of this application. In addition, FIG. 16 is merely instance of the circuit. Any circuit in which a transistor is added based on the circuit, so that functions of a plurality of transistors are equivalent to a function of one or more transistors in FIG. 16 is also considered as a same circuit.

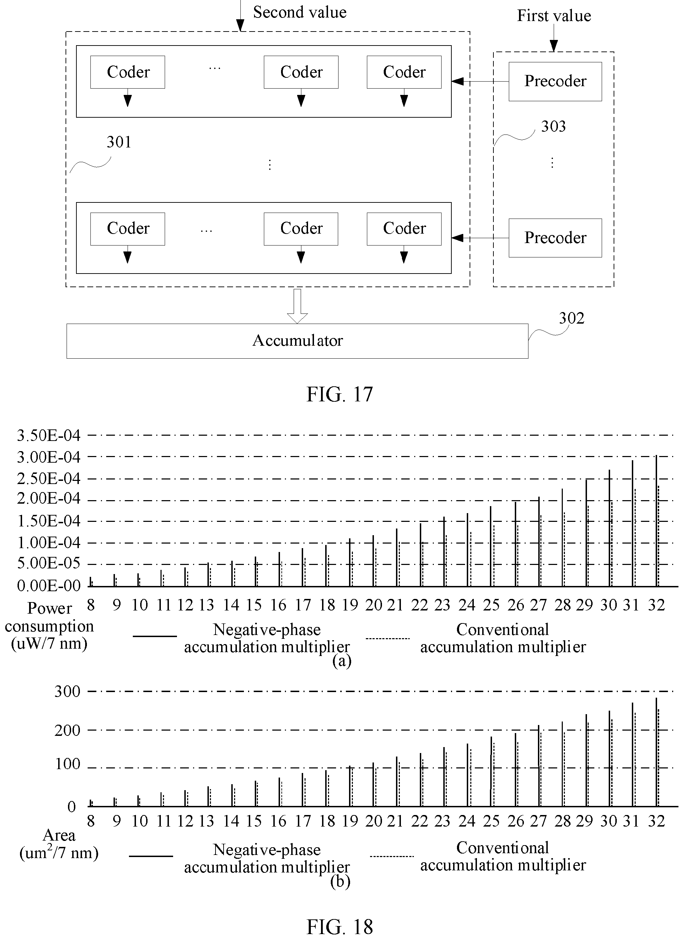

Based on this, an embodiment of this application further provides a multiplier. As shown in FIG. 17, the multiplier may include a plurality of groups of coders 301 and an accumulator 302. The plurality of groups of coders 301 may be configured to code a first value and a second value that are represented by binary numbers, to obtain a plurality of partial product items. The accumulator 302 may be configured to accumulate the plurality of partial product items to obtain a product of the first value and the second value. The accumulator 302 may be any accumulator provided above. The plurality of partial product items may be used as the input array of the $1^{st}$ compressor layer in the W compressor layers of the accumulator.

Optionally, the multiplier may further include a plurality of precoders 303. The plurality of precoders 303 may be configured to precode the first value to obtain a precoding result. Correspondingly, the plurality of groups of coders 301 may be configured to code the precoding result and the second value to obtain the plurality of partial product items. For more specific descriptions of the multiplier shown in FIG. 17, refer to the international patent PCT/CN2019/119993.

In this embodiment of this application, the multiplier (referred to as a negative-phase accumulation multiplier hereinafter) of the accumulator provided above is compared with an existing multiplier (referred to as a conventional accumulation multiplier hereinafter) of an accumulator implemented based on a standard adder. Specifically, power consumption and an area in a 7 nm process are shown in FIG. 18. In an embodiment of this application, the multiplier is not limited to the following specific parameter values. (a) in FIG. 18 shows magnitude of power consumption of accumulators corresponding to the negative-phase accumulation multiplier and the conventional accumulation multiplier when the negative-phase accumulation multiplier and the conventional accumulation multiplier are used to separately perform a multiplication operation on two 8-bit to 32-bit binary numbers. (b) in FIG. 18 shows sizes of areas of the accumulators corresponding to the negative-phase accumulation multiplier and the conventional accumulation multiplier when the negative-phase accumulation multiplier and the conventional accumulation multiplier are used to separately perform a multiplication operation on two 8-bit to 32-bit binary numbers. It can be learned from FIG. 18 that both power consumption and an area of the negative-phase accumulation multiplier are less than power consumption and an area of the conventional accumulation multiplier.

In this embodiment of this application, in the accumulator of the negative-phase accumulation multiplier, the input array of each of the at least one first compressor layer includes the first array and the second array. Therefore, the first array may be considered as a Wallace tree including the plurality of positive-phase bits. The second array may be considered as the Wallace tree including the plurality of negative-phase bits. In other words, the input array includes two Wallace trees. Phases of bits included in the two Wallace trees are opposite. For the first array and the second array, the first compression circuit 21 is configured to compress the first array, and the second compression circuit 22 is configured to compress the second array. In this way, bits with different phases in the input array can be compressed by the different compression circuits. Therefore, there is no need to unify the bits in the input array of each first compressor layer to have the same phase. Accordingly, the accumulator is simpler than the conventional design in implementation. In addition, the area and the power can be reduced. Therefore, an area and power consumption of a multiplier using the accumulator are also small and low.

In another embodiment of this application, a processor is further provided, including an accumulator, a multiplier, or an operator circuit. The accumulator is the accumulator provided above. The multiplier is the multiplier that includes the accumulator and that is provided above. The operator circuit includes any one or more operator circuits provided above.

In another embodiment of this application, a chip is provided, including an accumulator, a multiplier, or an operator circuit. The accumulator is the accumulator provided above. The multiplier is the multiplier that includes the accumulator and that is provided above. The operator circuit includes any one or more operator circuits provided above.

In another embodiment of this application, a communication device is further provided. A structure of the communication device may be shown in FIG. 4. To be specific, the communication device may include the memory 101, the processor 102, the communication interface 103, and the bus 104. The processor 102 may include the accumulator provided above, or the multiplier that includes the accumulator and that is provided above.

It should be noted that the foregoing related descriptions of the accumulator and the operator circuit may be correspondingly referenced to the multiplier, the processor, the chip, and the accumulator and the operator circuit that are included in the communication device shown in FIG. 16. Details are not described in embodiments of this application again.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. An accumulator, comprising W compressor layers, wherein W is an integer greater than or equal to 1;

   the W compressor layers are used to compress a plurality of binary numbers to obtain a plurality of accumulated values, wherein a sum of the plurality of accumulated values is an accumulated sum of the plurality of binary numbers;
   the W compressor layers comprise at least one first compressor layer, each first compressor layer is used to compress an input array to obtain an output array, wherein the input array comprises a first array and a second array, the first array comprises a plurality of positive-phase bits, the second array comprises a plurality of negative-phase bits, and the output array comprises a first compressed array and a second compressed array; and
   each first compressor layer comprises:

   a first compression circuit, configured to compress the first array to obtain the first compressed array; and
   a second compression circuit, configured to compress the second array to obtain the second compressed array.

2. The accumulator according to claim 1, wherein the first compression circuit comprises one or more first compressors, and each of the one or more first compressors is used to compress three bits located in a same digit weight in the first array; and
   the second compression circuit comprises one or more second compressors, and each of the one or more second compressors is used to compress three bits located in a same digit weight in the second array.

3. The accumulator according to claim 2, wherein each first compressor and each second compressor each are a negative-phase sum adder; and
   the negative-phase sum adder is used to compress the three bits to obtain a carry output bit and a sum output bit, wherein a phase of the carry output bit is the same as phases of the three bits, and a phase of the sum output bit is opposite to the phases of the three bits.

4. The accumulator according to claim 3, wherein the negative-phase sum adder is used to perform the following compression:

   if the three bits each are 0, the carry output bit is 0, and the sum output bit is 1;
   if the three bits each are 1, the carry output bit is 1, and the sum output bit is 0;
   if one bit in the three bits is 1, and the other two bits each are 0, the carry output bit is 0, and the sum output bit is 0; or
   if two bits in the three bits each are 1, and the other bit is 0, the carry output bit is 1, and the sum output bit is 1.

5. The accumulator according to claim 2, wherein each first compressor and each second compressor each are a negative-phase carry adder; and
   the negative-phase carry adder is used to compress the three bits to obtain a carry output bit and a sum output bit, wherein a phase of the carry output bit is opposite to phases of the three bits, and a phase of the sum output bit is the same as the phases of the three bits.

**6.** The accumulator according to claim 5, wherein the negative-phase carry adder is used to perform the following compression:

if the three bits each are 0, the carry output bit is 1, and the sum output bit is 0;
if the three bits each are 1, the carry output bit is 0, and the sum output bit is 1;
if one bit in the three bits is 1, and the other two bits each are 0, the carry output bit is 1, and the sum output bit is 1; or
if two bits in the three bits each are 1, and the other bit is 0, the carry output bit is 0, and the sum output bit is 0.

**7.** The accumulator according to claim 2, wherein each first compressor and each second compressor each are a double-negative-phase adder; and
the double-negative-phase adder is used to compress the three bits to obtain a carry output bit and a sum output bit, wherein a phase of the carry output bit and a phase of the sum output bit are both opposite to phases of the three bits.

**8.** The accumulator according to claim 7, wherein the double-negative-phase adder is used to perform the following compression:

if the three bits each are 0, the carry output bit is 1, and the sum output bit is 1;
if the three bits each are 1, the carry output bit is 0, and the sum output bit is 0;
if one bit in the three bits is 1, and the other two bits each are 0, the carry output bit is 1, and the sum output bit is 0; or
if two bits in the three bits each are 1, and the other bit is 0, the carry output bit is 0, and the sum output bit is 1.

**9.** The accumulator according to any one of claims 1 to 8, wherein the accumulator further comprises:
a summation circuit, configured to: receive the plurality of accumulated values, and sum the plurality of accumulated values to obtain the accumulated sum.

**10.** The accumulator according to any one of claims 3 to 9, wherein the accumulator further comprises:
one or more inverters, configured to perform negation on at least one of a sum output bit and a carry output bit that are output by one or more first compressors or second compressors in the W compressor layers, or perform negation on the three bits input to the one or more first compressors or second compressors.

**11.** A multiplier, wherein the multiplier comprises a coder and the accumulator according to any one of claims 1 to 10.

**12.** An operator circuit, comprising a first transistor, a second transistor, a third transistor, a fourth transistor, a fifth transistor, a sixth transistor, a seventh transistor, an eighth transistor, a ninth transistor, a tenth transistor, an eleventh transistor, a twelfth transistor, a thirteenth transistor, a fourteenth transistor, a fifteenth transistor, a sixteenth transistor, a seventeenth transistor, an eighteenth transistor, a nineteenth transistor, a twentieth transistor, a twenty-first transistor, a twenty-second transistor, a twenty-third transistor, and a twenty-fourth transistor, wherein

the first transistor and the second transistor are coupled in parallel between a power supply end and a first node;
the third transistor is coupled between the first node and a second node;
the fourth transistor is coupled between the second node and a third node;
the fifth transistor and the sixth transistor are coupled in parallel between the third node and a ground terminal;
the seventh transistor is coupled between the power supply end and a fourth node;
the eighth transistor is coupled between the second node and the fourth node;
the ninth transistor is coupled between the second node and a fifth node;
the tenth transistor and the eleventh transistor are coupled in series between the fourth node and a first output end;
the twelfth transistor and the thirteenth transistor are coupled in series between the fifth node and the first output end;
the fourteenth transistor is coupled between the fifth node and the ground terminal;
the fifteenth transistor, the sixteenth transistor, and the seventeenth transistor are coupled in parallel between the power supply end and a sixth node;
the eighteenth transistor is coupled between the first output end and the sixth node;
the nineteenth transistor is coupled between the first output end and a seventh node;
the twentieth transistor, the twenty-first transistor, and the twenty-second transistor are coupled in parallel between the seventh node and the ground terminal;
control ends of the third transistor, the fourth transistor, the eleventh transistor, the twelfth transistor, the fifteenth transistor, and the twentieth transistor are all configured to receive a first input;

control ends of the first transistor, the fifth transistor, the seventh transistor, the fourteenth transistor, the sixteenth transistor, and the twenty-first transistor are all configured to receive a second input;

control ends of the second transistor, the sixth transistor, the eighth transistor, the ninth transistor, the tenth transistor, the thirteenth transistor, the seventeenth transistor, and the twenty-second transistor are all configured to receive a third input;

control ends of the eighteenth transistor and the nineteenth transistor are both coupled to the second node;

the twenty-third transistor and the twenty-fourth transistor are coupled in series between the power supply end and the ground end, and a coupling point of the twenty-third transistor and the twenty-fourth transistor is a second output end; and

control ends of the twenty-third transistor and the twenty-fourth transistor are both coupled to the second node.

13. The operator circuit according to claim 12, wherein the first transistor, the second transistor, the third transistor, the seventh transistor, the eighth transistor, the tenth transistor, the eleventh transistor, the fifteenth transistor, the sixteenth transistor, the seventeenth transistor, the eighteenth transistor, and the twenty-third transistor are PMOS transistors; and

the fourth transistor, the fifth transistor, the sixth transistor, the ninth transistor, the twelfth transistor, the thirteenth transistor, the fourteenth transistor, the nineteenth transistor, the twentieth transistor, the twenty-first transistor, the twenty-second transistor, and the twenty-fourth transistor are NMOS transistors.

14. An operator circuit, comprising a first transistor, a second transistor, a third transistor, a fourth transistor, a fifth transistor, a sixth transistor, a seventh transistor, an eighth transistor, a ninth transistor, a tenth transistor, an eleventh transistor, a twelfth transistor, a thirteenth transistor, a fourteenth transistor, a fifteenth transistor, a sixteenth transistor, a seventeenth transistor, an eighteenth transistor, a nineteenth transistor, a twentieth transistor, a twenty-first transistor, a twenty-second transistor, a twenty-third transistor, and a twenty-fourth transistor, wherein

the first transistor and the second transistor are coupled in parallel between a power supply end and a first node;

the third transistor is coupled between the first node and a first output end;

the fourth transistor is coupled between the first output end and a second node;

the fifth transistor and the sixth transistor are coupled in parallel between the second node and a ground terminal;

the seventh transistor is coupled between the power supply end and a third node;

the eighth transistor is coupled between the third node and the first output end;

the ninth transistor is coupled between the first output end and a fourth node;

the tenth transistor and the eleventh transistor are coupled in series between the third node and a fifth node;

the twelfth transistor and the thirteenth transistor are coupled in series between the fourth node and the fifth node;

the fourteenth transistor is coupled between the fourth node and the ground terminal;

the fifteenth transistor, the sixteenth transistor, and the seventeenth transistor are coupled in parallel between the power supply end and a sixth node;

the eighteenth transistor is coupled between the fifth node and the sixth node;

the nineteenth transistor is coupled between the fifth node and a seventh node;

the twentieth transistor, the twenty-first transistor, and the twenty-second transistor are coupled in parallel between the seventh node and the ground terminal;

control ends of the third transistor, the fourth transistor, the eleventh transistor, the twelfth transistor, the fifteenth transistor, and the twentieth transistor are all configured to receive a first input;

control ends of the first transistor, the fifth transistor, the seventh transistor, the fourteenth transistor, the sixteenth transistor, and the twenty-first transistor are all configured to receive a second input;

control ends of the second transistor, the sixth transistor, the eighth transistor, the ninth transistor, the tenth transistor, the thirteenth transistor, the seventeenth transistor, and the twenty-second transistor are all configured to receive a third input;

control ends of the eighteenth transistor and the nineteenth transistor are both coupled to the first output end;

the twenty-third transistor and the twenty-fourth transistor are coupled in series between the power supply end and the ground end, and a coupling point of the twenty-third transistor and the twenty-fourth transistor is a second output end; and

control ends of the twenty-third transistor and the twenty-fourth transistor are both coupled to the fifth node.

15. The operator circuit according to claim 14, wherein the first transistor, the second transistor, the third transistor, the seventh transistor, the eighth transistor, the tenth transistor, the eleventh transistor, the fifteenth transistor, the sixteenth transistor, the seventeenth transistor, the eighteenth transistor, and the twenty-third transistor are PMOS transistors; and

the fourth transistor, the fifth transistor, the sixth transistor, the ninth transistor, the twelfth transistor, the thirteenth transistor, the fourteenth transistor, the nineteenth transistor, the twentieth transistor, the twenty-first transistor, the twenty-second transistor, and the twenty-fourth transistor are NMOS transistors.

|  | B7 | B6 | B5 | B4 | B3 | B2 | B1 | B0 |
|---|---|---|---|---|---|---|---|---|
| x0 | 0 | 1 | 0 | 1 | 0 | 0 | 1 | 1 |
| x1 | 0 | 0 | 1 | 1 | 1 | 0 | 0 | 1 |
| + x2 | 1 | 1 | 1 | 1 | 1 | 0 | 0 | 1 |
| | ... | ... | ... | ... | ... | ... | ... | ... | ... |

(a)

|  | B7 | B6 | B5 | B4 | B3 | B2 | B1 | B0 |
|---|---|---|---|---|---|---|---|---|
| x0 | 1 | 0 | 0 | 1 | 0 | 0 | 1 | 1 |
| × x1 | 1 | 0 | 1 | 0 | 1 | 1 | 0 | 1 |

```
                1  0  0  1  0  0  1  1
             0  0  0  0  0  0  0  0
          1  0  0  1  0  0  1  1
       1  0  0  1  0  0  1  1
    0  0  0  0  0  0  0  0
 1  0  0  1  0  0  1  1
 0  0  0  0  0  0  0  0
+1  0  0  1  0  0  1  1
```

(b)

FIG. 1

FIG. 2

1st compressor layer

B5   B3   B1

B4   B2   B0

2nd compressor layer

B5   B3   B1

B6   B4   B2   B0

3rd compressor layer   ...

B7   B5   B3   B1

B6   B4   B2   B0

$\underline{S}$

$\underline{C}$

Standard adder

Standard adder

IN0

IN1

IN2

+

S

C

FIG. 3

Communication device

103

Communication
interface

Processor

102

Accumulator

104

Memory

101

FIG. 4

**Accumulator**

A plurality of binary numbers

L1

L2

First compression circuit 21

First compressor 211

...

First compressor 211

Second compression circuit 22

Second compressor 221

...

Second compressor 221

W compressor layers

LW

First compression circuit 21

First compressor 211

...

First compressor 211

Second compression circuit 22

Second compressor 221

...

Second compressor 221

Summing circuit 23

FIG. 5

Negative-phase sum adder

IN0

IN1

IN2

+

/S

C

FIG. 6

1st compression layer

B5    B3    B1
   B4    B2    B0

2nd compression layer

B5    B3    B1
B6    B4    B2    B0

TO FIG. 7B

S

/S

Second
matrix

221

/C

TO FIG. 7B

C

27 binary
numbers

/S

C

211

211

First matrix

Negative-phase sum adder

○  Positive-phase bit

●  Negative-phase bit

FIG. 7A

3<sup>rd</sup> compression layer

4<sup>th</sup> compression layer ···

B7  B5  B3  B1

B7  B5  B3  B1

CONT.
FROM
FIG. 7A

B6  B4  B2  B0

/S

B6  B4  B2  B0

211

221

First
matrix

Second
matrix

CONT.
FROM
FIG. 7A

C

/C

S

211

221

First matrix

Second matrix

FIG. 7B

Negative-phase carry adder

IN0 ——           —— S

IN1 ——    +

IN2 ——           ○— /C

FIG. 8

FIG. 9A

3rd compressor layer      4th compressor layer    ...

B7   B5   B3   B1      B7   B5   B3   B1

CONT.
FROM
FIG. 9A

CONT.
FROM
FIG. 9A

FIG. 9B

Double-negative-phase adder

IN0

IN1     +

IN2

/S

/C

FIG. 10

FIG. 11

/S

C

Perform
negation on /S

S

C

◯ Positive-phase bit          ● Negative-phase bit

▯ Negative-phase sum adder          △ Inverter

FIG. 12

Input matrix          i<sup>th</sup> compressor layer          Output matrix

Perform
negation

/S

C

◯ Positive-phase bit          ● Negative-phase bit

▯ Negative-phase sum adder          △ Inverter

FIG. 13

FIG. 14

FIG. 15

FIG. 16

Second value                    First value

Coder  ...  Coder  Coder  ◄—  Precoder

301                                303

⋮                                    ⋮

Coder  ...  Coder  Coder  ◄—  Precoder

Accumulator                                    302

## FIG. 17

Power
consumption
(uW/7 nm)        ——— Negative-phase        ........... Conventional
                accumulation multiplier        accumulation multiplier
(a)

Area
(um²/7 nm)        ——— Negative-phase        ........... Conventional
                accumulation multiplier        accumulation multiplier
(b)

## FIG. 18

## INTERNATIONAL SEARCH REPORT

| | International application No. |
|---|---|
| | **PCT/CN2021/109751** |

**A.    CLASSIFICATION OF SUBJECT MATTER**

G06F 7/50(2006.01)i;  G06F 7/523(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE; 百度, BAIDU; 读秀, DUXIU: 累加器, 加法器, 乘法累加, 压缩, 阵列, 正相, 反相, 全加器, 半加器, 华莱士树, accumulator, adder, multiply-accumulate, MAC, compressor, array, positive phase, inverse phase, full adder, half adder, Wallace tree

**C.    DOCUMENTS CONSIDERED TO BE RELEVANT**

| Category* | Citation of document, with indication, where appropriate, of the relevant passages | Relevant to claim No. |
|---|---|---|
| A | 孔鑫 等 (KONG, Xin et al.). "一种面向卷积神经网络加速器的高性能乘累加器 ( High Performance Multiply-accumulator for the Convolutional Neural Networks Accelerator)" 西安电子科技大学学报 *(Journal of Xidian University)*, Vol. 47, No. 4, 31 August 2020 (2020-08-31), ISSN: 1001-2400, pp. 55-63 | 1-15 |
| A | CN 112596699 A (HAIGUANG INFORMATION TECHNOLOGY CO., LTD.) 02 April 2021 (2021-04-02) entire document | 1-15 |
| A | CN 105528191 A (INSTITUTE OF COMPUTING TECHNOLOGY, CHINESE ACADEMY OF SCIENCES) 27 April 2016 (2016-04-27) entire document | 1-15 |
| A | US 2007244943 A1 (SONY COMPUTER ENTERTAINMENT INC.) 18 October 2007 (2007-10-18) entire document | 1-15 |
| A | US 2003158879 A1 (IBM) 21 August 2003 (2003-08-21) entire document | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 February 2022** | **02 March 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/109751**

### C.    DOCUMENTS CONSIDERED TO BE RELEVANT

| Category* | Citation of document, with indication, where appropriate, of the relevant passages | Relevant to claim No. |
|---|---|---|
| A | LIU, Weiqiang et al. "Design and Analysis of Approximate Redundant Binary Multipliers" *IEEE TRANSACTIONS ON COMPUTERS*, Vol. 68, No. 6, 30 June 2019 (2019-06-30), ISSN: 0018-9340, pp. 804-819 | 1-15 |

Form PCT/ISA/210 (second sheet) (January 2015)

**INTERNATIONAL SEARCH REPORT**
Information on patent family members

International application No.

**PCT/CN2021/109751**

| Patent document cited in search report | | | Publication date (day/month/year) | Patent family member(s) | | | Publication date (day/month/year) |
|---|---|---|---|---|---|---|---|
| CN | 112596699 | A | 02 April 2021 | None | | | |
| CN | 105528191 | A | 27 April 2016 | WO | 2017092283 | A1 | 08 June 2017 |
| | | | | US | 2018321912 | A1 | 08 November 2018 |
| | | | | US | 10379816 | B2 | 13 August 2019 |
| | | | | CN | 105528191 | B | 12 April 2017 |
| US | 2007244943 | A1 | 18 October 2007 | US | 7720902 | B2 | 18 May 2010 |
| | | | | JP | 2007234005 | A | 13 September 2007 |
| | | | | JP | 4290203 | B2 | 01 July 2009 |
| US | 2003158879 | A1 | 21 August 2003 | US | 6763367 | B2 | 13 July 2004 |

Form PCT/ISA/210 (patent family annex) (January 2015)

## REFERENCES CITED IN THE DESCRIPTION

**Patent documents cited in the description**

- CN 2019119993 W